# EUROPEAN PATENT SPECIFICATION

(11) **EP 4 339 990 B1**
(45) Date of publication and mention of the grant of the patent: **06.05.2026**
(21) Application number: 23194827.4
(22) Date of filing: 01.09.2023
(51) Int. Cl.: H01T 2/02, H01T 1/02, H01T 1/14, H02H 9/06, H01H 37/76, H01C 7/12, H01T 4/10, H01H 37/08

(54) **SURGE PROTECTIVE DEVICES**
ÜBERSPANNUNGSSCHUTZVORRICHTUNGEN
DISPOSITIFS DE PROTECTION CONTRE LES SURTENSIONS

(30) Priority: 14.09.2022 US 202263375588 P; 14.09.2022 US 202263375591 P; 30.03.2023 US 202363493026 P; 25.08.2023 US 202318455692; 25.08.2023 US 202318455697
(43) Date of publication of application: 20.03.2024
(60) Divisional application: 26161295.6
(73) Proprietor: RIPD IP Development Ltd, 2012 Nicosia (CY)
(72) Inventor: TOPCAGIC, Zumret, 1000 Ljubljana (SI); ROZMAN, Robert, 1216 Smlednik (SI); KOURAKOS, Vasileios, 14565 Athens (GR)
(74) Representative: HL Kempner PartG mbB

(56) References cited:
- EP-A1- 3 331 111
- DE-A1- 102021 102 819
- FR-A- 1 052 741
- US-B2- 9 083 153

## Description

### Field

The present invention relates to surge protective devices (SPDs).

### Background

Frequently, excessive voltage or current is applied across or through service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges is not acceptable and resulting downtime may be very costly.

Typically, sensitive electronic equipment may be protected against transient overvoltages and surge currents using surge protective devices (SPDs). For example, an overvoltage protection device may be installed at a power input of equipment to be protected, which is typically protected against overcurrents when it fails. Typical failure mode of an SPD is a short circuit. The overcurrent protection typically used is a combination of an internal thermal disconnector to protect the SPD from overheating due to increased leakage currents and an external fuse to protect the SPD from higher fault currents. Different SPD technologies may avoid the use of the internal thermal disconnector because, in the event of failure, they change their operation mode to a low ohmic resistance.

SPDs may use one or more active voltage switching/limiting components, such as a varistor or gas discharge tube, to provide overvoltage protection. These active voltage switching/limiting components may degrade at a rapid pace as they approach the end of their operational lifespans, which may result in their exhibiting continuous short circuit behavior.

An example of a voltage-limiting device is given in FR 1052741 (Ledoux), which has a resistance, e.g. a semiconductor, partly bridging the spark gap.

### Summary

According to the invention, there is provided a surge protective device according to claim 1, which includes a first electrical terminal, a second electrical terminal, and an overvoltage protection circuit connected between the first electrical terminal and the second electrical terminal. The overvoltage protection circuit includes a spark gap assembly between the first electrical terminal and the second electrical terminal. The spark gap assembly includes a first spark gap (SG) electrode and a second SG electrode defining a spark gap therebetween, and a trigger circuit operative to ignite a main electric arc between the first and second SG electrodes across the spark gap. The trigger circuit includes a groove defined in the second SG electrode, and a trigger member disposed in the groove. The trigger member is operative to assist formation of a trigger arc. The trigger circuit includes a trigger electrode interposed between the trigger member and the first SG electrode; the trigger electrode electrically connects the trigger member to the first electrical terminal in electrical parallel with the first SG electrode; the first SG electrode, the second SG electrode and the trigger electrode define: a first trigger spark gap between the second SG electrode and the trigger electrode; and a second trigger spark gap between the trigger electrode and the first SG electrode; and the spark gap assembly is configured to, in response to a surge impulse current, initiate a first trigger arc across the first trigger spark gap and thereafter a second trigger arc across the second trigger spark gap.

According to some embodiments, the trigger member is a semiconductive trigger member.

In some embodiments, the semiconductive trigger member is formed of a semiconductive ceramic.

In some embodiments, the semiconductive ceramic is selected from the group consisting of zinc oxide, barium titanate, and silicon carbide.

According to some embodiments, the trigger circuit includes a trigger varistor, a trigger gas discharge tube, and/or a trigger resistive element in electrical series with the trigger member and in electrical parallel with the spark gap.

According to some embodiments, the trigger electrode is in electrical contact with the trigger member and with the second SG electrode.

In some embodiments, the trigger circuit includes a trigger varistor, a trigger gas discharge tube, and/or a trigger resistive element in electrical series with the trigger electrode and in electrical parallel with the first SG electrode.

According to some embodiments, the spark gap assembly is a horn spark gap assembly.

In some embodiments, the trigger member is located at a first end of the spark gap, and the spark gap assembly includes an arc chute located at an opposing second end of the spark gap.

According to some embodiments, the surge protective device of Claim 1 includes an active voltage-switching/limiting component in electrical series with the spark gap assembly.

In some embodiments, the active voltage-switching/limiting component includes a varistor or a gas discharge tube.

In some embodiments, the trigger circuit has a trigger threshold flashover voltage for initiating electrical flashover between the first and second SG electrodes that is less than a threshold flashover voltage that would initiate electrical flashover between the first and second SG electrodes in the absence of the trigger circuit.

According to some embodiments, the surge protective device is a surge protective device module including a spark gap module housing, and the spark gap assembly is disposed in the spark gap module housing.

In some embodiments, the trigger member is located at a first end of the spark gap, and the spark gap module housing includes an arc gas recirculation channel configured to direct a flow of arc gas from a second end of the spark gap opposite the first end of the spark gap to an ignition region of the spark gap adjacent the trigger member.

In some embodiments, the spark gap module housing includes an intake port configured to direct a flow of ambient air into an ignition region of the spark gap adjacent the trigger member.

According to some embodiments, a surge protective device includes a first electrical terminal, a second electrical terminal, and an overvoltage protection circuit connected between the first electrical terminal and the second electrical terminal. The overvoltage protection circuit includes a spark gap assembly between the first electrical terminal and the second electrical terminal. The spark gap assembly includes a first spark gap (SG) electrode and a second SG electrode defining a spark gap therebetween, and a trigger circuit operative to ignite a main electric arc between the first and second SG electrodes across the spark gap. The trigger circuit includes a semiconductive trigger member operative to assist formation of a trigger arc. The semiconductive trigger member is formed of a semiconductive ceramic.

In some embodiments, the semiconductive ceramic is selected from the group consisting of zinc oxide, barium titanate, and silicon carbide.

In some embodiments, the trigger circuit includes a trigger varistor, a trigger gas discharge tube, and/or a trigger resistive element in electrical series with the trigger member and in electrical parallel with the spark gap.

According to some embodiments, the trigger circuit includes a trigger electrode in electrical contact with the trigger member and connecting the trigger member in electrical parallel with first SG electrode.

In some embodiments, the trigger circuit includes a trigger varistor, a trigger gas discharge tube, and/or a trigger resistive element in electrical series with the trigger electrode and in electrical parallel with first SG electrode.

According to some embodiments, the spark gap assembly is a horn spark gap assembly.

In some embodiments, the trigger member is located at a first end of the spark gap, and the spark gap assembly includes an arc chute located at an opposing second end of the spark gap.

According to some embodiments, the surge protective device includes an active voltage-switching/limiting component in electrical series with the spark gap assembly.

In some embodiments, the active voltage-switching/limiting component includes a varistor or a gas discharge tube.

In some embodiments, the trigger circuit has a trigger threshold flashover voltage for initiating electrical flashover between the first and second SG electrodes that is less than a threshold flashover voltage that would initiate electrical flashover between the first and second SG electrodes in the absence of the trigger circuit.

According to some embodiments, the surge protective device is a surge protective device module including a spark gap module housing, and the spark gap assembly is disposed in the spark gap module housing

In some embodiments, the trigger member is located at a first end of the spark gap, and the spark gap module housing includes an arc gas recirculation channel configured to direct a flow of arc gas from a second end of the spark gap opposite the first end of the spark gap to an ignition region of the spark gap adjacent the trigger member.

In some embodiments, the spark gap module housing includes an intake port configured to direct a flow of ambient air into an ignition region of the spark gap adjacent the trigger member.

In some embodiments, the spark gap assembly is a horn spark gap assembly and the spark gap assembly includes an arc chute. The arc chute includes a set of deion plates including: a plurality of first deion plates each having a first slot having a first profile; and a plurality of second deion plates each having a second slot having a second profile different than the first profile. The first and second deion plates are arranged in spaced apart relation and in alternating series along a chute axis such that the first and second deion plates define a series of arc chute spark gaps extending along the chute axis.

In some embodiments, the overvoltage protection circuit includes an active voltage-switching/limiting component, the spark gap assembly is in electrical series with the active voltage-switching/limiting component between the first electrical terminal and the second electrical terminal, the spark gap assembly is a horn spark gap assembly, and the spark gap assembly includes an arc chute.

According to some embodiments, a surge protective device includes a first electrical terminal, a second electrical terminal, and an overvoltage protection circuit connected between the first electrical terminal and the second electrical terminal. The overvoltage protection circuit includes a spark gap assembly including a horn spark gap assembly, and an arc chute. The arc chute includes a set of deion plates including a plurality of first deion plates each having a first slot having a first profile, and a plurality of second deion plates each having a second slot having a second profile different than the first profile. The first and second deion plates are arranged in spaced apart relation and in alternating series along a chute axis such that the first and second deion plates define a series of arc chute spark gaps extending along the chute axis.

In some embodiments, the first and second slots cross one another along the chute axis.

According to some embodiments, a surge protective device includes a first electrical terminal, and a second electrical terminal, an overvoltage protection circuit connected between the first electrical terminal and the second electrical terminal. The overvoltage protection circuit includes an active voltage-switching/limiting component, and a spark gap assembly in electrical series with the active voltage-switching/limiting component between the first electrical terminal and the second electrical terminal. The spark gap assembly includes a horn spark gap assembly, an arc chute, and a spark gap trigger circuit operative to ignite the horn spark gap assembly.

### Brief Description of the Drawings

The accompanying drawings, which form a part of the specification, illustrate embodiments of the present invention.
**FIG. 1** is a block diagram that illustrates an electrical power supply circuit including a surge protective device (SPD) module as background.
**FIG. 2** is a schematic view of an SPD circuit and module as background.
**FIG. 3** is a perspective view of the SPD module in accordance with the schematic view of **FIG. 2****.**
**FIG. 4** is a perspective view of the SPD module of **FIG. 3** with a portion of the housing removed.
**FIG. 5** is a fragmentary, perspective view of the SPD module of **FIG. 3****.**
**FIG. 6** is a fragmentary, side view of the SPD module of **FIG. 3****.**
**FIG. 7** is a fragmentary, cross-sectional view of the SPD module **of** **FIG. 3** taken along the line **7-7** of **FIG. 6****.**
**FIG. 8** is an exploded, fragmentary, perspective view of a spark gap assembly of the SPD module of **FIG. 3****.**
**FIG. 9** is a fragmentary, cross-sectional view of the SPD module **of** **FIG. 3** taken along the line **9-9** of **FIG. 7****.**
**FIG. 10** is an enlarged, fragmentary, side view of an SPD module as background, including an electrically resistive trigger member.
**FIG. 11** is an enlarged, fragmentary, side view of an SPD module according to further embodiments including an MOV trigger member.
**FIG. 12** is perspective view of the MOV trigger member of the SPD module of **FIG. 11****.**
**FIG. 13** **is** an enlarged, fragmentary, side view of an SPD module as background, including **a** semiconductive trigger member.
**FIG. 14** **is** an enlarged, fragmentary, side view of an SPD module according to further embodiments including an electrically resistive trigger member.
**FIG. 15** **is** an enlarged, fragmentary, side view of an SPD module as background, including a MOV trigger member.
**FIG. 16** **is** an enlarged, fragmentary, side view of an SPD module as background, including an electrically resistive trigger member.
**FIG. 17** is a fragmentary, cross-sectional view of the SPD module of FIG. 16 taken along the line **17-17** of **FIG. 16****.**
**FIG. 18** is an enlarged, fragmentary, perspective view of an SPD module as background.
**FIG. 19** is a fragmentary, side view of the SPD module of **FIG. 18**
**FIG. 20** is an enlarged, fragmentary, side view of an SPD module as background.
**FIG. 21** is an enlarged, fragmentary, side view of an SPD module as background.
**FIG. 22** is an enlarged, fragmentary, side view of an SPD module as background.
**FIG. 23** is a perspective view of an SPD module according to an embodiment.
**FIG. 24** is a schematic view of an SPD circuit of the SPD module of FIG. 23.
**FIG. 25** is a fragmentary, perspective view of the SPD module of **FIG. 23****.**
**FIG. 26** is a fragmentary, perspective view of a spark gap assembly of the SPD module of **FIG. 23****.**
**FIG. 27** is a fragmentary, side view of the spark gap assembly of **FIG. 26****.**
**FIG. 28** is an exploded, fragmentary, perspective view of the spark gap assembly of **FIG. 26****.**
**FIG. 29** is a fragmentary, cross-sectional view of the spark gap assembly of **FIG. 26** taken along the line **29-29** of **FIG. 25****.**
**FIG. 30** is a fragmentary, cross-sectional view of the SPD module of **FIG. 23** taken along the line **30-30** of **FIG. 29****.**
**FIG. 31** **is** a fragmentary, side view of the SPD module of **FIG. 23****.**
**FIG. 32** **is** an exploded, perspective view of a deion chamber of the SPD module of **FIG. 23****.**
**FIG. 33** is a fragmentary, cross-sectional view of the SPD module of **FIG. 23** taken along the line **33-33** of **FIG. 23****.**
**FIG. 34** is a perspective view of an SPD assembly according to further embodiments, wherein the SPD module may include the SPD module of **FIG. 23****.**
**FIG. 35** is a block diagram that illustrates an electrical power supply circuit including the SPD assembly of **FIG. 34****.**
**FIG. 36** is a cross-sectional view of the SPD assembly of **FIG. 34** taken along the line **36-36** of **FIG. 34****.**
**FIG. 37** is an exploded, perspective view of the SPD assembly of **FIG. 34****.**
**FIG. 38** is a fragmentary, front view of the SPD assembly of **FIG. 34****.**
**FIG. 39** is a fragmentary, side view of the SPD assembly of **FIG. 34**

### Detailed Description of Embodiments

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It is noted that aspects described with respect to one embodiment may be incorporated in different embodiments although not specifically described relative thereto. That is, all embodiments and/or features of any embodiments can be implemented separately or combined in any way and/or combination. Moreover, other apparatus, methods, and systems according to embodiments of the inventive concept will be or become apparent to one with skill in the art upon review of the following drawings and detailed description. It is intended that all such additional apparatus, methods, and/or systems be included within this description, be within the scope of the present inventive subject matter, and be protected by the accompanying claims.

As used herein, "monolithic" means an object that is a single, unitary piece formed or composed of a material without joints or seams. Alternatively, a unitary object can be a composition composed of multiple parts or components secured together at joints or seams.

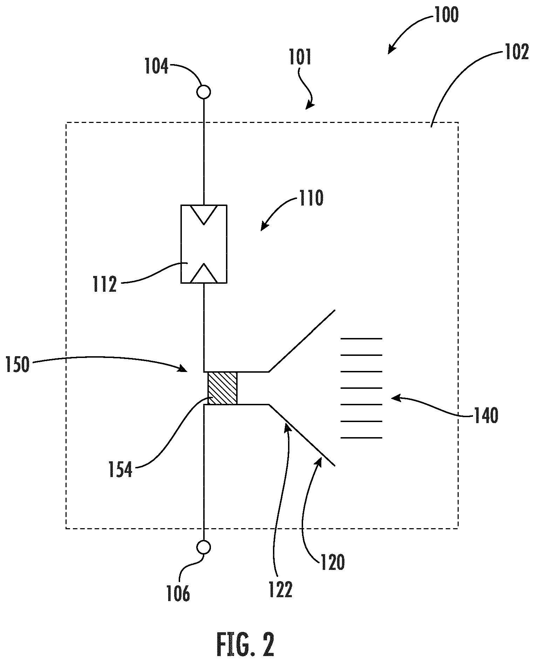

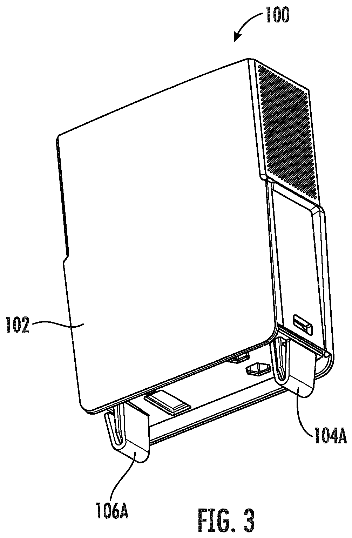

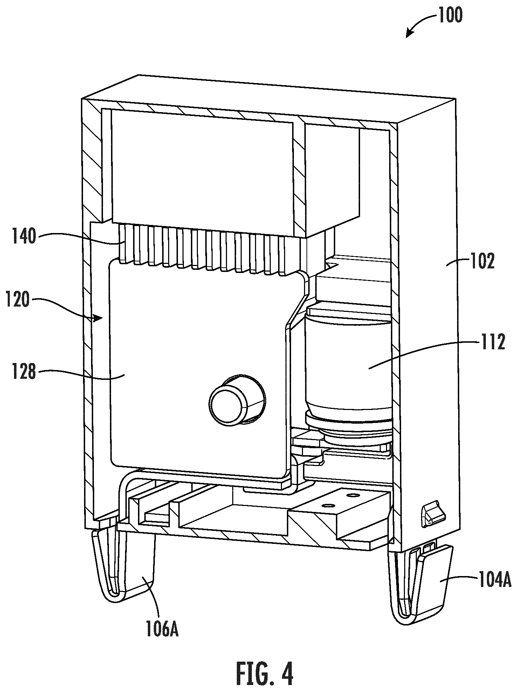

With reference to **FIGS. 2-9****,** a surge protective device (SPD) in the form of an SPD unit or SPD module **100** is shown therein. The SPD module **100** includes an SPD electrical circuit **101.**

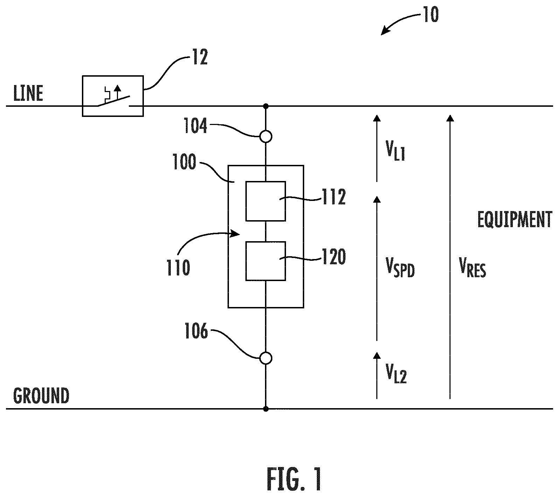

In some applications, the SPD electrical circuit **101** or the SPD module **100** is provided, installed and used as a component in a protection circuit of a power supply circuit **10** as shown in **FIG. 1****,** for example. In the power supply circuit **10,** the SPD electrical circuit **101** is in electrical parallel across sensitive equipment. The SPD module **100** is designed to protect the sensitive equipment from overvoltages and current surges. The SPD module **100** may also be connected to the power source via an upstream second fuse or circuit breaker **12.**

The SPD module **100** includes a module housing **102,** a first or phase electrical terminal electrode **104,** a second or ground electrical terminal electrode **106,** and an overvoltage protection circuit (OPC) **110.** The OPC **110** is disposed in the housing **102,** and is electrically connected between the terminals **104** and **106** to form the SPD electrical circuit **101.**

The housing **102** may be formed of any suitable electrically insulating material (e.g., an insulating polymer).

The first terminal electrode **104** includes a terminal contact or terminal **104A** and a GDT contact **104B.** The second terminal electrode 106 includes a terminal contact or terminal **106A** and an electrode contact **106B.**

The OPC **110** includes an active voltage-switching or active voltage limiting component **112** (referred to herein as a "voltage-switching/limiting component) and a spark gap assembly **120.** In some embodiments and as illustrated in the figures, the voltage-switching/limiting component **112** is a gas discharge tube (GDT).

In some versions, the GDT **112** has a rating of at least 12.5 kA of lightning impulse current.

In other versions, the OPC **110** may include an active voltage-switching or active voltage limiting component (referred to herein as a "voltage-switching/limiting component) other than a GDT in place of the GDT **112** or in addition to the GDT **112.**

In some versions, the OPC **110** is a varistor-based overvoltage protection circuit and the voltage-switching/limiting component **112** is a varistor. In some versions, the voltage-switching/limiting component **112** is a metal oxide varistor (MOV). For example, in some versions the OPC **110** is a varistor-based SPD as disclosed in U.S. Patent No. 8,743,525 to Xepapas et al..

The voltage-switching/limiting component **112** may also be another type of voltage-switching/limiting surge protective device. Other types of voltage-switching/limiting component **112** that may form, or form a part of, the OPC **110** may include spark gap devices, multi-cell GDTs *(e.g.,* as disclosed in U.S. Patent No. 10,685,805 to Rozman and U.S. Patent No. 10,186,842 to Rozman), diodes, or thyristors.

In some versions, only a single voltage-switching/limiting component **112** is included in OPC **110.** In some versions, the OPC **110** includes or consists of only the active voltage-switching/limiting component(s) **112,** the spark gap assembly **120** and associated electrical connections, if any.

The OPC **110** may include a plurality of voltage-switching/limiting components **112.** The OPC **110** may include one or more voltage-switching/limiting components **110** in combination with other electrical components. In some embodiments, the OPC **110** includes multiple varistors (connected in electrical parallel or series between the module terminals), multiple GDTs (e.g., connected in electrical series), and/or both varistor(s) and GDT(s) (*e.g*., connected in electrical series with the varistor(s)), and/or other circuit elements, such as resistors, inductors, or capacitors.

The GDT **112** includes opposed electrical contact terminals **112A, 112B.**

The spark gap assembly **120** includes a spark gap subassembly or horn spark gap assembly **122,** a spark gap (SG) trigger circuit **150,** and a deion chamber or arc chute **140.** The SG trigger circuit **150** is located at an inner end **120A** of the spark gap assembly **120** and the arc chute **140** is located at an opposing outer end **120B** of the spark gap assembly **120.**

The horn spark gap assembly **122** includes a first spark gap (SG) electrode **124,** a second spark gap (SG) electrode **126,** a spark gap **130,** and laterally opposed side or containment walls **128.** The spark gap **130** is defined between the electrodes **124, 126.**

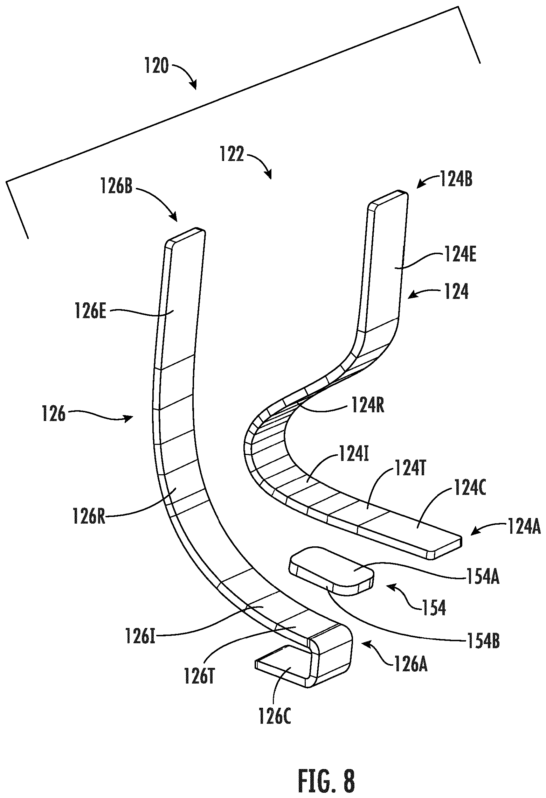

The first SG electrode **124 (****FIG. 8****)** has an inner end **124A** and an opposing outer end **124B.** The first SG electrode **124** includes (extending sequentially from the inner end **124A** to the outer end **124B)** a contact section **124C,** a trigger section **124T,** an ignition section **124I,** a running section **124R,** and an extinguishing section **124E.**

The second SG electrode **126 (****FIG. 8****)** has an inner end **126A** and an opposing outer end **124B.** The second SG electrode **124** includes (extending sequentially from the inner end **126A** to the outer end **126B)** a contact section **126C,** a trigger section **126T,** an ignition section **126I,** a running section **126R,** and an extinguishing section **126E.**

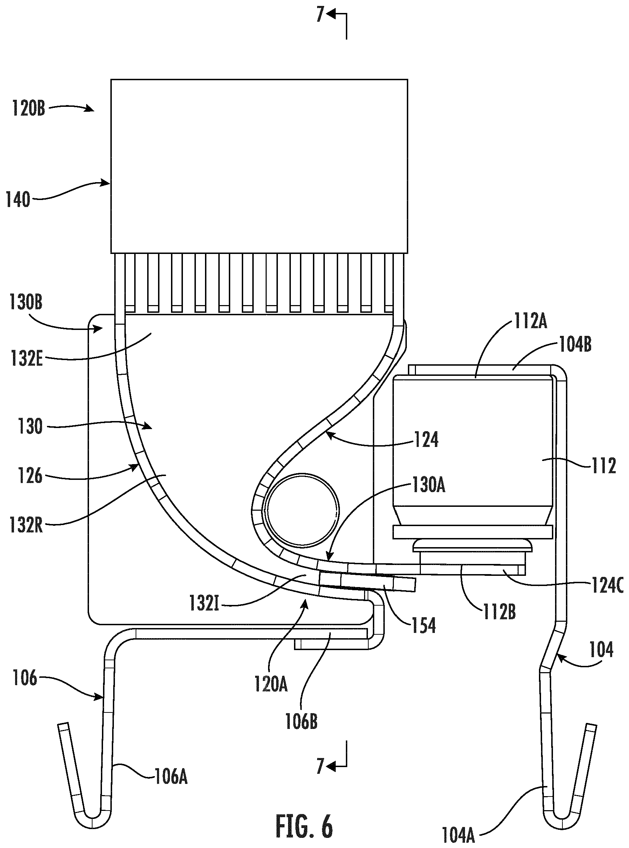

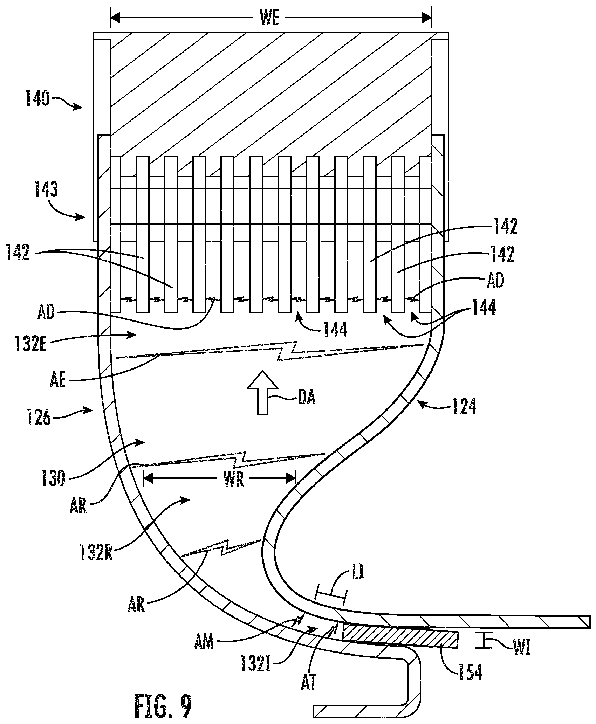

The spark gap **130** extends from an inner end **130A** and to an opposing outer end **130B.** With reference to **(****FIGS. 6** and **9****),** the spark gap **130** includes (extending sequentially from the inner end **130A** to the outer end **130B)** an ignition region **132I,** a running region **132R,** and an extinguishing region **132E.** The spark gap **130** expands, widens or flares outward in a direction **DA** from the end **130A** to the end **130B.** As a result, the spark gap **130** has a first width **WI** in the ignition region **132I,** a second width **WR** in the running region **132R,** and a third width **WE** in the extinguishing region **132E.** Width **WR** is great than width **WI,** and width **WE** is greater than width **WR.** Width **WR** varies and expands along the length of the running region **132R.** In some versions, the spark gap **130** expands smoothly from the ignition region **132I** to the extinguishing region **132E.** In some versions, the SG electrodes **124, 126** each have a curved profile.

In some versions, the spark gap width **WI (****FIG. 9****;** *i.e.,* the separation distance between the SG electrodes **124, 126)** is at least 0.5 mm and, in some versions, is at least 1 mm. In some versions, the spark gap width **WI** is in the range of from about 0.5 mm to 2 mm.

In some versions, the spark gap width **WE (****FIG. 9****)** is in the range of from about 20 mm to 40 mm. In some versions, the spark gap width **WE** is in the range of from about 1000 to 4000 percent greater than the spark gap width **WI.**

The SG electrodes **124, 126** may be formed of any suitable electrically conductive metal. In some versions, the SG electrodes **124, 126** are formed of copper, copper-steel bimetal, or any other combination of metals in bimetal composition.

The containment walls **128** may be formed of any suitable material. In some versions, the containment walls **128** are formed of ceramic, polymer or plastic, insulating paper, ferromagnetic material insulated by paper, plastic or ceramic, or ferromagnetic material coated with a polymer or plastic.

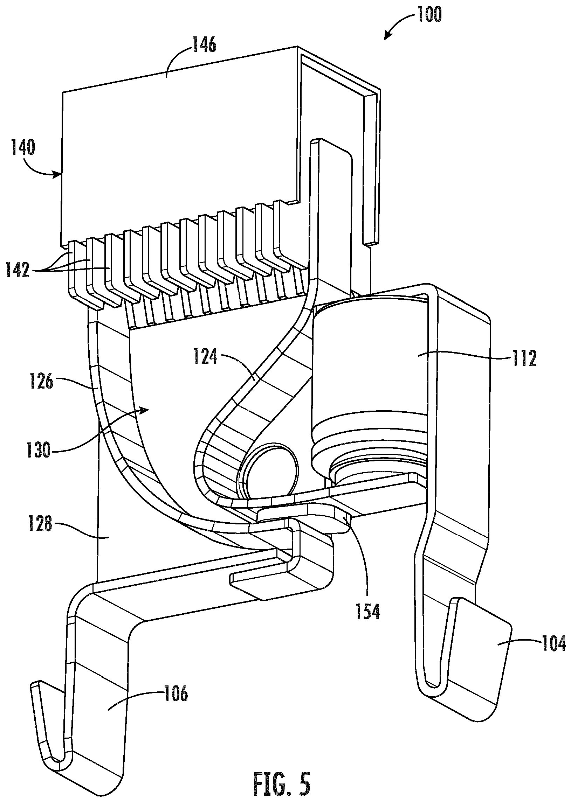

With reference to **FIGS. 5** and **9****,** the arc chute **140** is located at the outer end **130B** of the horn spark gap assembly **122** at, in or proximate the extinguishing region **132E.** The arc chute **140** includes a set **143** or series of electrically conductive arc, chute or deion electrodes or plates **142** supported by electrically insulating supports **146.** The deion plates **142** are separated by deion plate arc gaps **144.**

The SG trigger circuit **150** includes the ignition region **132I** of the spark gap 130 and a semiconductive trigger member **154**. The semiconductive member **154** is positioned in or adjacent the gap **132I** and interposed between the gap electrode trigger sections **124T** and **126T.** The semiconductive trigger member **154** is connected in electrical series between the SG electrodes **124, 126.**

The semiconductive trigger member **154** extends from a first end face **154A** to an opposing second end face **154B.** The first end face **154A** electrically engages or contacts the electrode trigger section **124T.** The second end face **154B** electrically engages or contacts the electrode trigger section **126T.**

The semiconductive trigger member **154** may be formed of any suitable semiconductive material.

In some versions, the semiconductive trigger member **154** is formed of a composition including a mixture of a polymeric material (*e.g*., a rubber or a plastic) as a nonconductive matrix and an electrically conductive filler. In some versions, the nonconductive matrix includes silicone. In other versions, the conductive filler is graphite powder. In some cases, the conductive filler is expanded graphite powder.

The conductive filler may be a material other than graphite powder having a relatively high secondary emission, such as beryllium oxide (BeO), magnesium oxide (MgO), or gallium phosphide (GaP).

In some versions, the semiconductive member **154** is formed of a semiconductive ceramic. In some versions, the semiconductive member **1254** is formed of ZnO (zinc oxide) or BaTiO3 (Barium titanate) or SiC (silicon carbide), with different dopants (oxides, metals).

The semiconductive member **154** can be rigid or flexible depending on the polymer matrix. In some versions, the semiconductive member **154** has a porous structure. In some versions, the semiconductive member **154** has an amorphous structure.

In some versions, the semiconductive material of the semiconductive member **154** has a specific electrical resistance in the range of from 1 to 10,000 Ωcm, and a dielectric constant in the range of from 1 to 10,000. The semiconductive material may have a positive or negative temperature coefficient.

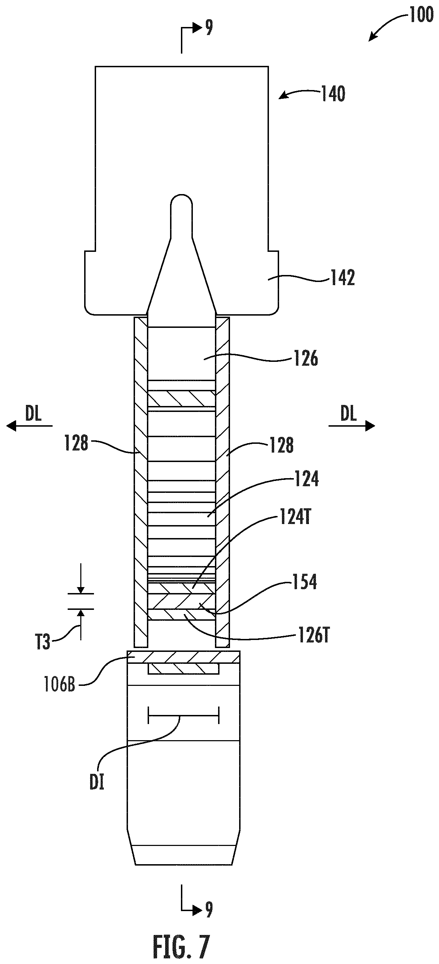

In some versions, the semiconductive trigger member **154** has a thickness **T3 (****FIG. 7****)** of at least 0.5 mm, perhaps at least 1 mm. In some versions, the thickness **T3** is in the range of from about 0.5 mm to 2 mm.

With reference to **FIG.** 6, the terminal **104A** is electrically connected to the GDT terminal **112A** by the GDT contact **104B.** The SG electrode **124** is electrically connected to the GDT terminal **112B** by the contact section **124C.** The terminal **106A** is electrically connected to the SG electrode **126** by the contact section **126C.** Under some conditions, as discussed below, the SG electrode **124** is electrically connected to the SG electrode **126** by electric arcing to complete the electrical circuit from the terminal **104** to the terminal **106.**

The SG electrodes **124, 126** and the semiconductive member **154** define gap open regions or volumes in the ignition region **132I** adjacent or around the semiconductive member **154** *(i.e.,* around the volume of the gap ignition region **132I** filled or occupied by the semiconductive member **154).** Opposed regions of the SG electrodes **124, 126** in the ignition region **132I** are exposed *(i.e.,* are not covered by the semiconductive member **154).** The ignition region **132I** serves as a trigger gap.

The spark gap **130** at the gap ignition region **132I** has a prescribed threshold flashover voltage. In some versions, the prescribed threshold flashover voltage is less than 1500V. In some versions, the prescribed threshold flashover voltage is in the range of from about 300V to 1500V. When a voltage is applied across the SG electrodes **124, 126** that is less than the threshold flashover voltage, the applied voltage will not ignite or initiate arc flashover between the SG electrodes **124, 126.** As discussed below, when a voltage is applied across the SG electrodes **124, 126** that is greater than or equal to the threshold flashover voltage, the applied voltage will ignite or initiate arc flashover between the SG electrodes **124, 126.**

In some versions, the length **LI (****FIG. 9****)** of the ignition region **132I** is in the range of from about 1 mm to 5 mm.

In some versions, the height **DI (****FIG. 7****;** *i.e.,* the lateral dimension of the spark gap 130 and the width of the SG electrodes **124, 126)** of the ignition region **132I** is in the range of from about 3 mm to 8 mm.

The SPD module **100** may operate as follows in service.

As described, the SPD circuit **101** includes a high surge current rated GDT **112** in electrical series with a horn spark gap assembly **122.** The horn spark gap assembly **122** is provided with a trigger element **154.**

According to some versions of the device shown, the SPD module **100** is configured to operate under two different conditions: 1) normal (stand by) operation; and 2) an overvoltage or current surge event in which the SPD module **100** is designed to shunt an SPD surge impulse current to ground.

The SPD module 100 is designed to shunt an SPD surge impulse current to ground in response to an overvoltage or current surge event.

The SPD module **100** is configured to operate in three alternative modes: 1) a standby mode; 2) a surge current mode; and 3) a follow current extinguishing mode.

The terminal **104** is electrically connected to the Line (L) of the circuit **10,** and the terminal **106** is electrically connected to the Ground (G) of the circuit **10 (****FIG. 1****).**

During normal operation, the OPC **110** practically acts as **an** insulator. The voltage applied across the GDT **112** and across the spark gap **130** is insufficient to initiate current through the GDT **112** or to initiate a spark across the spark gap **130.**

When an overvoltage or current surge event *(e.g.,* a transient power surge) applies a surge impulse current to the SPD circuit **101,** the OPC **110** will temporarily go to a low impedance state (*e.g*., effectively becoming a short circuit). The voltage-switching/ limiting component **112** (*e.g.,* GDT) of the OPC **110** is designed to shunt the surge impulse current associated with such events to ground to protect sensitive equipment. The SPD surge impulse current may be on the order of tens of kA, but will typically last only a short duration (in the range of from about tens of microseconds to a few milliseconds).

During the surge event, the voltage applied across the ignition region **132I** of the spark gap **130** by the surge event exceeds the prescribed threshold flashover voltage of the ignition region **132I.** In response, the voltage across the ignition region **132I** initiates electrical arc flashover or trigger arc **AT (****FIG. 9****)** across the spark gap **130** in the ignition region **132I**. That is, electrical arcing **AT is** generated between the SG electrode ignition sections **124I** and **126I.**

The initiation of the trigger arc **AT** is assisted by the semiconductive trigger member 154 in response to the overvoltage developed across the ignition section **124I** and the ignition section **126I.** At the beginning of the surge current, current conduction occurs through the bulk of the semiconductive member body and along the exterior surface **154C** of the semiconductive trigger member **154.** Very quickly thereafter (*e.g*., within less than 1 microsecond), the flashover of the trigger arc **AT** occurs so that most of the surge current is bypassed through the arc column(s) established between the SG electrodes **124, 126.** By diverting the current around the semiconductive trigger member **154,** degradation of the semiconductive trigger member **154** is prevented or reduced.

Shortly after the start of the trigger arc **AT** (*e.g*., within microseconds), the current flow triggers an electric arc flashover or surge **arc AM** (as illustrated in **FIG. 9****)** across the spark gap **130.** The SG trigger circuit **150** thereby ignites the horn spark gap assembly **122** and the full surge current is thereby conducted through the spark gap assembly **122** via the surge arc **AM.**

The GDT **112** and the spark gap assembly **120** are thereby each triggered changing their states to low impedance. The surge current flows from the terminal **104A** to the terminal **106A** through the GDT **112** and the spark gap **130,** thereby diverting the surge current to ground. During the surge event, the arcing or arc column **AM** across the spark gap **130** may be located entirely or mainly in the arc ignition region **132I** or partially in the running region **132R.**

The SPD **100** then enters its follow current mode. Once the surge current is diverted to the ground, the GDT **112** and the spark gap **122** remain electrically conductive, causing additional follow current from the system to flow into the SPD '**100.** This causes the arc column to move in an arc migration direction **DA** (from the end **130A** toward the end **130B)** along the arc running region **132R** of the spark gap **122** to the arc extinguishing region 132E. **FIG. 9** illustrates the arc column in the arc running region **132R** as an electric arc **AR,** and the arc column in the arc extinguishing region **132E** as an electric arc **AE.**

In the arc extinguishing region **132E,** the follow current is redirected to (is conducted to, or flashes over to or arcs to) the deion plates **142** from the SG electrode **124.** The current then flows through the set **143** of deion plates to the SG electrode **126** by arcing **AD** between the deion plates **143.**

Each deion plate arc **AD** creates a voltage drop between the SG electrodes **124, 126** and the terminals **104, 106.** These voltage drops add together increasing the voltage between the SG electrodes **124, 126** to relatively high values, until the voltage across the arc chute **140 is** higher than the power system voltage. The voltage drop developed on the arc chute **140** opposes the mains voltage thus the follow current is rapidly reduced and eventually extinguished.

These voltage drops also reduce the voltage across the spark gap **122** to relatively low values, until the voltage across the spark gap **122** is less than the ignition voltage necessary to sustain the arcing between the SG electrodes **124, 126.** The voltage across the spark gap **122** is then also less than necessary to trigger flashover between the ignition sections **124I**, **126I** or to conduct current through or along the surface of the semiconductive trigger member **154.** That is, at this lower voltage, the semiconductive trigger member **154** operates as an electrical insulator between the SG electrodes **124, 126.** The spark gap assembly **122** is thereby opened at the spark gap **130** and the follow current through the spark gap assembly **122** and the SPD module 100 is cut off or interrupted. The SPD module **100** returns to its standby mode.

Thus, it will be appreciated that the electrical arc flashover **AT** triggers the electric arc flashover **AM,** which during follow current expands and propagates to the arc chute **140.** The expansion and propagation are driven by electromagnetic and acoustical forces. Once the arc **AE** enters the arc chute **140,** it is divided or split into a plurality of smaller arcs in the arc chute **140** and cooled down until the arc is eventually extinguished. This causes the SPD module **100 to** returns to its high impedance (standby) mode.

The semiconductive trigger member **154** functions as a spark gap trigger that assists in initiating the flashover between the SG electrodes **124, 126.** The spark gap initiation region **132I** is the closest distance between the SG electrodes **124, 126** and creates a small chamber that serves as the arc initiation area. In this chamber, the spark gap **130** has the dimensions **WI, DI,** and **LI.** The minimum separation distance **WI** between the electrodes **124, 126** at the trigger member **154** can prevent melting and soldering of the electrodes **124, 126** during surges. Because the semiconductive trigger member **154** is provided, the threshold flashover voltage of the gap **130** is less than the voltage that would be required to initiate the flashover across the gap **130** in the absence of the semiconductive trigger member **154.** By reducing the minimum required flashover voltage, the semiconductive trigger member **154** lowers the protection level of the SPD electrical circuit **101.**

The horn shape of the spark gap **130** facilitates the path of the arc **AM.** The geometry of the SG electrodes guides the arc **AM** from the ignition region **132I** to the extinguishing region **132E.** The containment walls **128** firmly restrict or contain the path of the arcing in the lateral directions **DL (****FIG. 7****).**

The GDT **112** is provided in front of the trigger member **154** because the trigger member **154** has some resistance and thus will conduct the current on nominal voltage. By including the GDT **112,** the OPC **110** is made leakage current free (and, thus, the SPD module **100** is leakage free). Additionally, the GDT **112** takes or absorbs some of the energy from surges and helps the trigger circuit **150 to** operate more effectively.

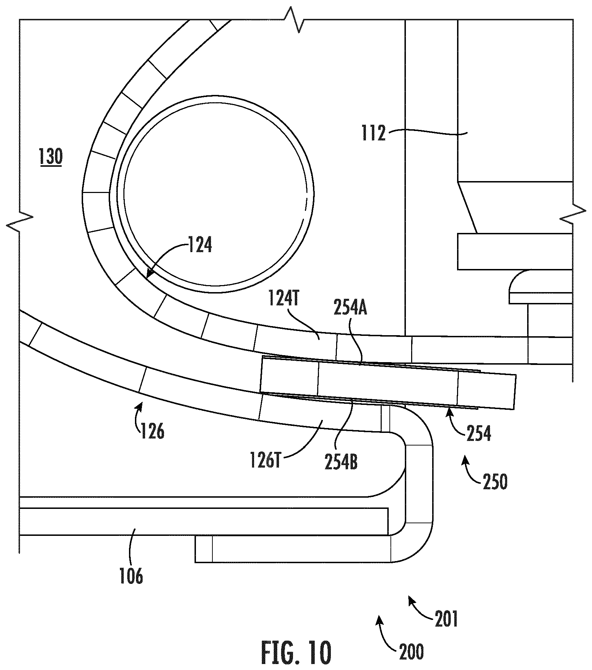

With reference to **FIG. 10****,** an SPD module **200** and SPD circuit **201** according to further versions in shown therein. The SPD module **200** and circuit **201** are constructed in the same manner as the SPD module **100** and circuit **101,** except as follows. For the purpose of explanation, the numerals used to reference parts of the SPD module **100 in** **FIGS. 2-9** are likewise used to designate the same parts in **FIG. 10****.**

The SPD module **200** includes an SG trigger circuit **250** constructed in the same manner as the SG trigger circuit **150,** except that an electrically resistive trigger member **254** is provided in place of the semiconductive trigger member **154.**

The end faces **254A, 254B** of the resistive trigger member **254** may be in direct contact with the trigger sections **124T, 126T** of the SG electrodes **124, 126.** Alternatively, the end faces **254A, 254B** may be directly electrically connected to the trigger sections **124T, 126T** by intervening metal layers.

The trigger member **254** may be formed of any suitable material. In some embodiments, the trigger member **254** is formed of a mixture including metal oxide powder, glass powder and/or graphite powder that is sintered. In some embodiments, the resistive material forming the trigger member **254** is a sintered body of ZnO, MgO with the addition of Al₂O₃ in a suitable percentage, or a sintered mixture of metal powder with SiO₂.

The SPD module **200** can be used and may operate in the manner described for the SPD module **100.** In this case, the resistive trigger member **254** serves in place of the semiconductive member **154** to trigger the flashover **AT.**

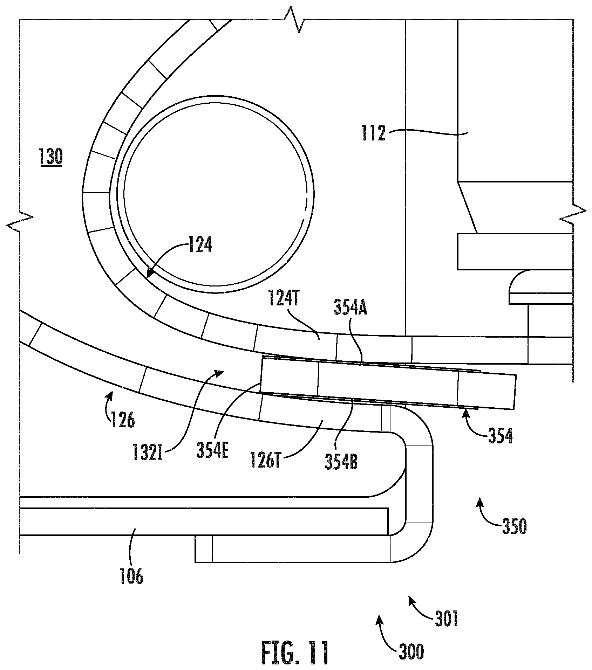

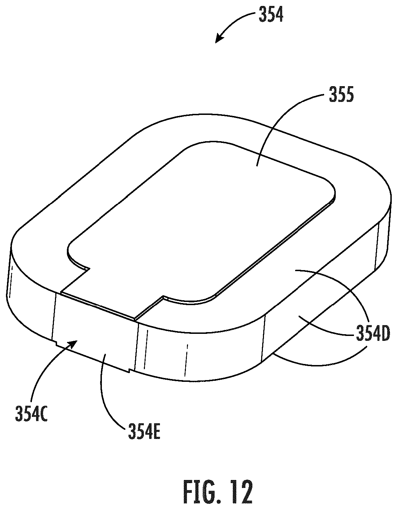

With reference to **FIGS. 11** and **12****,** an SPD module **300** and SPD circuit 301 according to further versions in shown therein. The SPD module **300** and circuit **301** are constructed in the same manner as the SPD module **100** and circuit **101,** except as follows. For the purpose of explanation, the numerals used to reference parts of the SPD module **100** in **FIGS. 2-9** are likewise used to designate the same parts in **FIG. 11****.**

The SPD module **300** includes an SG trigger circuit **350** constructed in the same manner as the SG trigger circuit **150,** except that a metal oxide varistor (MOV) trigger member **354 (****FIG. 12****) is** provided in place of the semiconductive trigger member **154.**

The end faces **354A, 354B** of the MOV trigger member **354** may be in direct contact with the trigger sections **124T, 126T** of the SG electrodes **124, 126.** Alternatively, the end faces **354A, 354B** may be directly electrically connected to the trigger sections **124T, 126T** by intervening metal layers **355** (*e.g.,* thin metallization layers).

The MOV trigger member **354** may be formed of any suitable material. The MOV trigger member material may be any suitable material conventionally used for varistors, namely, a material exhibiting a nonlinear resistance characteristic with applied voltage. Preferably, the resistance becomes very low when a prescribed voltage is exceeded. The varistor material may be a doped metal oxide or silicon carbide, for example. Suitable metal oxides include zinc oxide compounds.

The SPD module **300** can be used and may operate in the manner described for the SPD module **100.** In this case, the MOV trigger member **354** serves in place of the semiconductive member **154** to trigger the flashover **AT.**

In some versions, the MOV trigger member **354 includes** an MOV body **354C** (formed of a varistor material as described above) and an electrically insulating passivation layer **354D** surrounding portions of the MOV body **354C.** A surface region **354E** of the MOV body **354C** is not covered by the passivation layer **354D.** The surface region **354E** provides a surface region for flashover of the trigger arc **AT.** In some versions, the surface region **354E** is a relatively narrow region on a side wall of the MOV body **354C** and the remainder of the side wall is covered by the passivation layer **354D.** The passivation layer **354D** may be formed of glass, for example.

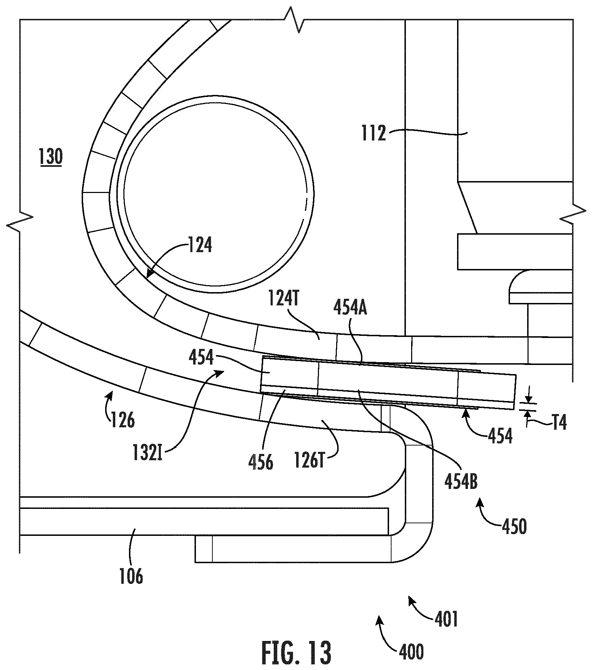

With reference to **FIG. 13****,** an SPD module **400** and SPD circuit **401** according to further versions in shown therein. The SPD module **400** and circuit **401** are constructed in the same manner as the SPD module **100** and circuit **101,** except as follows. For the purpose of explanation, the numerals used to reference parts of the SPD module **100** in **FIGS. 2-9** are likewise used to designate the same parts in **FIG. 13****.**

The SPD module **400** includes an SG trigger circuit **450** including a semiconductive trigger member **454** constructed in the same manner as the semiconductive trigger member **154.** The SG trigger circuit **450 is** constructed in the same manner as the SG trigger circuit **150,** except that an electrical insulator layer or film **456** contacts the electrode trigger section **126T** and is interposed between the semiconductive trigger member **454** and the SG electrode **126.** The first end face **454A** of the trigger member **454** electrically engages the electrode trigger section **124T.** The second end face **454A** of the trigger member **454** engages the insulator layer **456.** The trigger member **454** is electrically insulated from the electrode 126 by the insulator layer **456.**

The insulator layer **456** may be formed of any suitable electrically insulating material. In some versions, the insulator layer **456** is formed of a polymeric material (*e.g*., a rubber or a plastic). In some versions, the insulator layer **456** is formed of polyimide (*e.g*., KAPTON film) or ceramic.

In some embodiments, the insulator layer **456** has a thickness **T4** in the range of from about 0.1 mm to 0.3 mm.

The SPD module **400** can be used and may operate in the manner described for the SPD module **100.** In this case, the MOV trigger member **454** serves in place of the semiconductive member **154** to trigger the flashover **AT.**

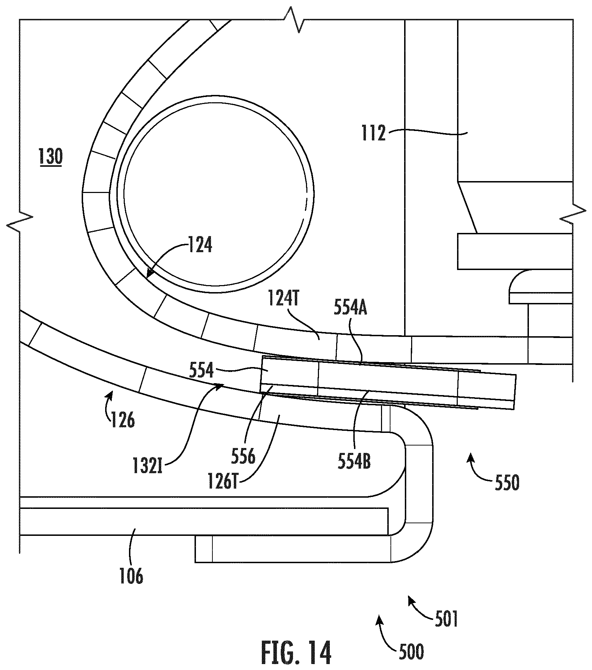

With reference to **FIG. 14****,** an **SPD** module **500** and SPD circuit **501** according to further versions in shown therein. The SPD module **500** and circuit **501** are constructed in the same manner as the SPD module **200** and circuit **201,** except as follows. For the purpose of explanation, the numerals used to reference parts of the SPD module **100** in **FIGS. 2-9** are likewise used to designate the same parts in **FIG. 14****.**

The SPD module **500** includes an SG trigger circuit **550** including a resistive trigger member **554** constructed as described for the resistive trigger member **254.** The SG trigger circuit **550** is constructed in the same manner as the SG trigger circuit **250,** except that an electrical insulator layer or film **556** contacts the electrode trigger section **126T** and is interposed between the trigger member **554** and the SG electrode **126.** The first end face **554A** of the trigger member **554** electrically engages the electrode trigger section **124T.** The second end face **554A** of the trigger member **554** engages the insulator layer **556.** The trigger member **554** is electrically insulated from the electrode **126** by the insulator layer 556.

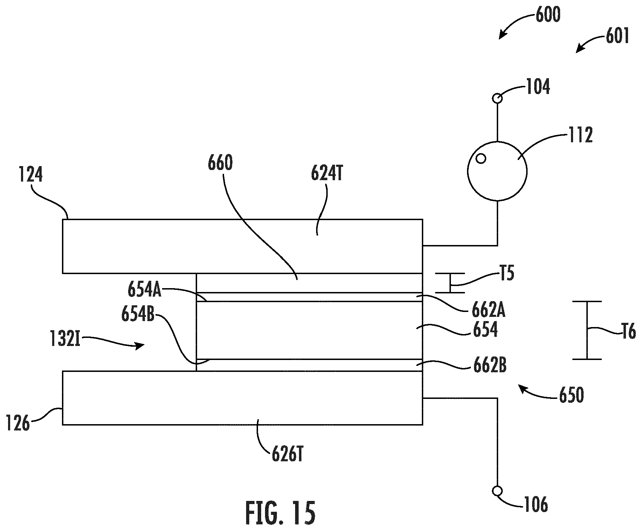

With reference to **FIG. 15****,** an SPD module **600** and SPD circuit **601** according to further versions in shown therein. The SPD module **600** and circuit **601** are constructed in the same manner as the SPD module **300** and circuit **301,** except as follows. For the purpose of explanation, the numerals used to reference parts of the SPD module **100** in **FIGS. 2-9** are likewise used to designate the same parts in **FIG. 15****.**

The SPD module **600** includes an SG trigger circuit **650** including an MOV trigger member **654** constructed in the same manner as the MOV trigger member **354.** The SG trigger circuit **650** is constructed in the same manner as the SG trigger circuit **350,** except that the SG trigger circuit **650** further includes a resistive material layer **660** and metal MOV electrodes **662A** and **662B.**

The end faces **654A** and **654B** of the MOV trigger member **654** are in contact with respective ones of the metal MOV electrodes **662A** and **662B.** The MOV electrodes **362A, 362B** may be discrete metal films or thin metallization layers, for example.

The resistive material layer **660** is formed of an electrically resistive material as described above for the resistive trigger member **254.** The resistive material layer 660 may be formed of a hard material or a polymer. In some versions, the resistive material layer 660 is porous.

The resistive material layer **660** is interposed between and electrically connects the MOV end face **654A** and the electrode trigger section **624T.** The MOV electrode **662B** is interposed between the MOV end face **654B** is electrically connected to the electrode trigger section **626T** by the MOV electrode **662B.**

In some versions, the resistive material layer **660** has a thickness **T5** in the range of from about 0.1 mm to 0.5 mm.

In some versions, the MOV trigger member **654** has a thickness **T6** in the range of from about 0.5 mm to 1.5 mm.

The SPD module **600** can be used and may operate in the manner described for the SPD module **100.** In this case, the MOV trigger member **654** serves to trigger the flashover **AT** as described for the MOV trigger member **354.** The resistive material layer **660** enables low triggering or flashover current and voltage levels, while the MOV trigger member **654** prevents and cuts off any continuation currents through the resistive film **660** after the surge arc **AM** is initiated.

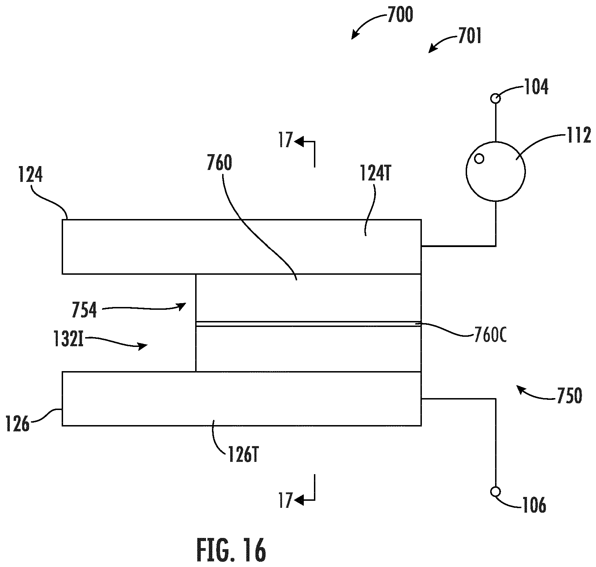

With reference to **FIG. 16****,** an SPD module **700** and SPD circuit **701** according to further versions in shown therein. The SPD module **700** and circuit **701** are constructed in the same manner as the SPD module **200** and circuit **201,** except as follows. For the purpose of explanation, the numerals used to reference parts of the SPD module **100** in **FIGS. 2-9** are likewise used to designate the same parts in **FIG. 16****.**

The SPD module **700** includes an SG trigger circuit **750** constructed in the same manner as the SG trigger circuit **150,** except that an electrically resistive trigger member **754** is provided in place of the resistive trigger member **254.**

The resistive trigger member **754** includes an electrically nonconducting substrate **764** (*e.g.,* ceramic) and a layer **760** of an electrical resistive material bonded to a face of the substrate **764** extending between the SG electrode trigger sections **124T, 126T.** The resistive material layer **760** contacts each of the SG trigger sections **124T, 126T.**

The resistive material layer **760** may be formed of an electrically resistive material as described above for the resistive trigger member **200.** In some embodiments, the resistive material layer **760** may be porous. The resistive material layer **760** may be applied as a coating to the substrate **764.**

A discontinuity or gap **760C** is defined in the resistive material layer **760.** The gap **760C** may be formed by cutting or etching the resistive material layer **760,** for example.

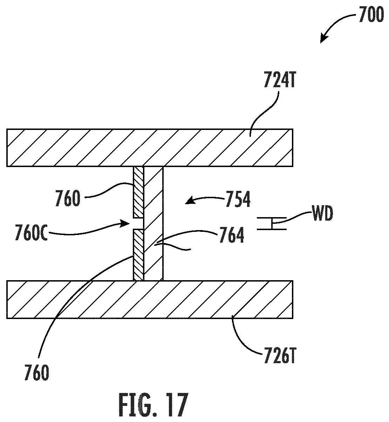

In some versions and as illustrated in **FIG. 17****,** the gap **760C** is a slot or gap that extends fully through the thickness of the resistive material layer **760** to the substrate **764.** In other versions, the gap **760C** is a groove, slot or gap that extends only partially through the thickness of the resistive material layer **760** (*i.e.,* the thickness of the resistive material layer **760** is reduced).

While only one gap **760C** is shown in the embodiment of **FIGS. 16** and **17****,** in other versions the resistive material layer **760** may be provided with multiple gaps **760C.**

In some versions, each gap **760C** has a width **W7 (****FIG. 17****)** of less than 0.2 mm.

The SPD module **700** can be used and may operate in the manner described for the SPD module **100.** In this case, the resistive trigger member **754** serves to trigger the flashover **AT** as described for the resistive trigger member **254.** The resistive material layer **760** enables low triggering or flashover current and voltage levels.

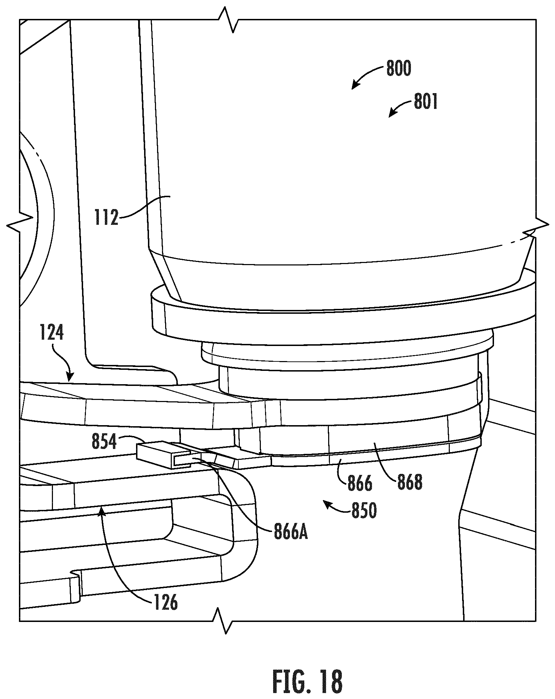

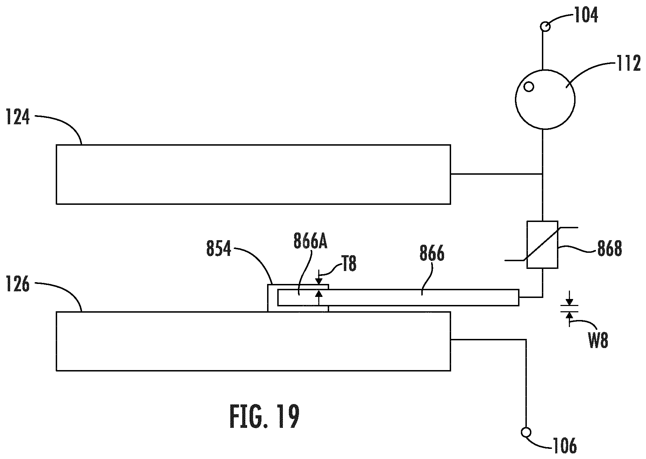

With reference to **FIGS. 18** and **19****,** an SPD module **800** and SPD circuit **801** according to further possibilities in shown therein. The SPD module **800** and circuit **801** are constructed in the same manner as the SPD module **100** and circuit **101,** except as follows. For the purpose of explanation, the numerals used to reference parts of the SPD module **100** in **FIGS. 2-9** are likewise used to designate the same parts in **FIGS. 18** and **19****.**

The SPD module **800** includes an SG trigger circuit **850** provided in place of the SG trigger circuit **150.** The SG trigger circuit **850** includes a trigger MOV member **868,** a trigger electrode **866,** and an electrically resistive film or layer **854.**

The resistive layer **854** surrounds a tip portion **866A** of the trigger electrode **866.** The resistive material layer **854** may be applied as a coating to the trigger electrode **866.** In some versions, the resistive material layer **854** fully surrounds the tip portion **866A.** In other versions, a portion or portions of the tip portion **866A** are not covered by the resistive material layer **854.**

The resistive layer **854** separates the tip portion **866A** from the SG electrodes **124,** 126. The resistive layer **854** also spaces the trigger electrode **866** away from the SG electrode **126.**

In some versions, the resistive material layer **854** has a thickness **T8** in the range of from about 0.1 mm to 0.5 mm.

In some versions, the spacing distance **W8** between the trigger electrode **866** and the SG electrode **126** is in the range of from about 0.1 mm to 0.5 mm.

The SPD module **800** can be used and may operate in the manner described for the SPD module **100.** In this case, the resistive material layer **854** enables low triggering or flashover current and voltage levels, while the trigger MOV member **868** prevents and cuts off any continuation currents through the resistive film **854** after the surge arc **AM** is initiated.

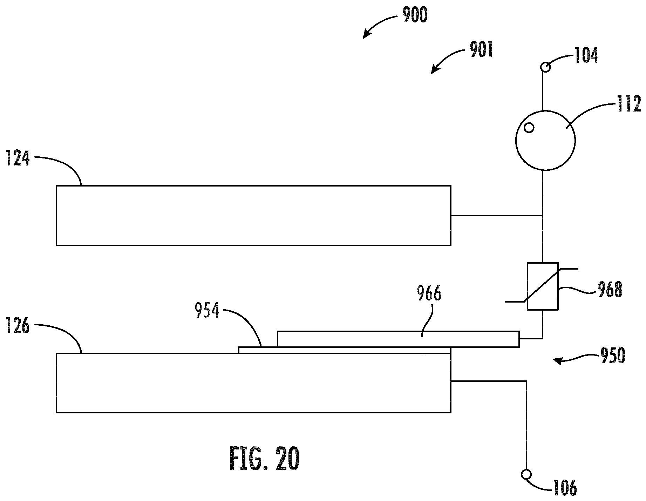

With reference to **FIG. 20****,** an SPD module **900** and SPD circuit **901** according to further versions in shown therein. The SPD module **900** and circuit **901** are constructed in the same manner as the SPD module **800** and circuit **801,** except as follows. For the purpose of explanation, the numerals used to reference parts of the SPD module **100 in** **FIGS. 2-9** are likewise used to designate the same parts in **FIG. 20****.**

The SPD module **900** includes an SG trigger circuit **950.** The SG trigger circuit 950 includes a trigger MOV member **968,** a trigger electrode **966,** and an electrically resistive film or layer **954.**

The SPD module **900 is** constructed in the same manner as the SG trigger circuit 850 except that the resistive layer **954** is interposed between the trigger electrode **966** and the SG electrode **126** but does not surround a tip portion of the trigger electrode **966.** In some embodiments, the resistive layer **954** is a coated onto the SG electrode **126** and the trigger electrode **966** is placed against the resistive layer **954.**

The SPD module **900** can be used and may operate in the manner described for the SPD module **800.** The resistive material layer **954** enables low triggering or flashover current and voltage levels, while the trigger MOV member **968** prevents and cuts off any continuation currents through the resistive film **954** after the surge arc **AM** is initiated.

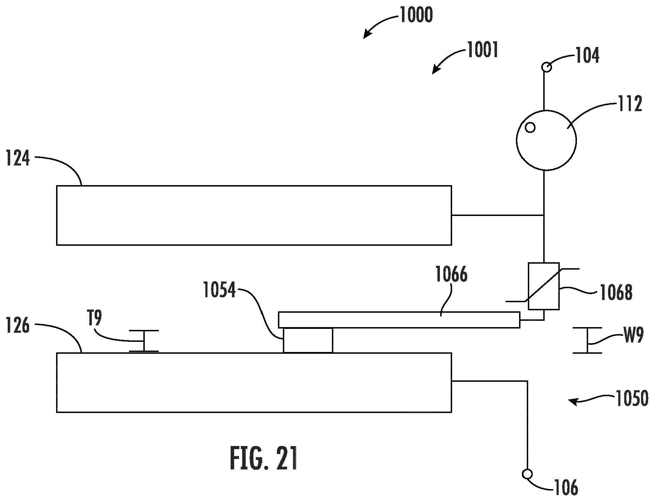

With reference to **FIG. 21****,** an SPD module **1000** and SPD circuit **1001** according to further versions in shown therein. The SPD module **1000** and circuit **1001** are constructed in the same manner as the SPD module **800** and circuit **801,** except as follows. For the purpose of explanation, the numerals used to reference parts of the SPD module **100 in** **FIGS. 2-9** are likewise used to designate the same parts in **FIG. 21****.**

The SPD module **1000** includes an SG trigger circuit **1050.** The SG trigger circuit **1050** includes a trigger MOV member **1068,** a trigger electrode **1066,** and an electrically resistive trigger member **1054.**

The resistive trigger member **1054** can be formed of a material as described for the resistive trigger member **254.**

In some versions, the resistive trigger member **1054** has a thickness **T9** in the range of from about 0.1 mm to 0.5 mm.

In some embodiments, the spacing distance **W9** between the trigger electrode **1066** and the SG electrode **126** is in the range of from about 0.1 mm to 0.5 mm.

The SPD module **1000** can be used and may operate in the manner described for the SPD module **800.** The resistive trigger member **1054** operates as described for the resistive trigger member **254.** The resistive trigger member **1054** enables low triggering or flashover current and voltage levels, while the trigger MOV member **1068** prevents and cuts off any continuation currents through or along the resistive trigger member **1054** after the surge arc **AM** is initiated.

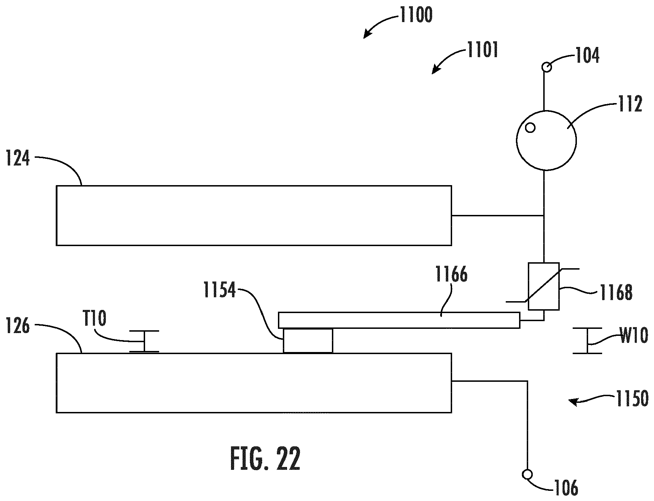

With reference to **FIG. 22****,** an SPD module **1100** and SPD circuit **1101** according to further versions in shown therein. The SPD module **1100** and circuit **1101** are constructed in the same manner as the SPD module **100** and circuit **101,** except as follows. For the purpose of explanation, the numerals used to reference parts of the SPD module **100 in** **FIGS. 2-9** are likewise used to designate the same parts in **FIG. 22****.**

The SPD module **1100** includes an SG trigger circuit 1150. The SG trigger circuit **1150** includes a trigger MOV member **1168,** a trigger electrode **1066,** and an electrically semiconductive trigger member **1154.**

The semiconductive trigger member **1154** can be formed of a material as described for the semiconductive trigger member **154** (*e.g.,* a polymeric semiconductive material).

In some versions, the semiconductive trigger member **1154** has a thickness T10 in the range of from about 0.1 mm to 0.5 mm.

In some versions, the spacing distance **W10** between the trigger electrode **1166** and the SG electrode **126** is in the range of from about 0.1 mm to 0.5 mm.

The SPD module **1100** can be used and may operate in the manner described for the SPD module **800.** The semiconductive trigger member **1154** operates as described for the resistive trigger member **154.** The semiconductive trigger member **1154** enables low triggering or flashover current and voltage levels, while the trigger MOV member **1154** prevents and cuts off any continuation currents through or along the semiconductive trigger member **1154** after the surge arc **AM** is initiated.

While the trigger circuits **850, 950, 1050** and **1150** have been described including trigger MOV members **868, 968, 1068, 1168,** in other versions the trigger circuit may include other voltage-switching/limiting components in addition to or in place of the MOV member. For example, the trigger circuit may include a trigger GDT in place of the trigger MOV or in electrical series with the trigger MOV and in electrical parallel with the SG electrode **124.**

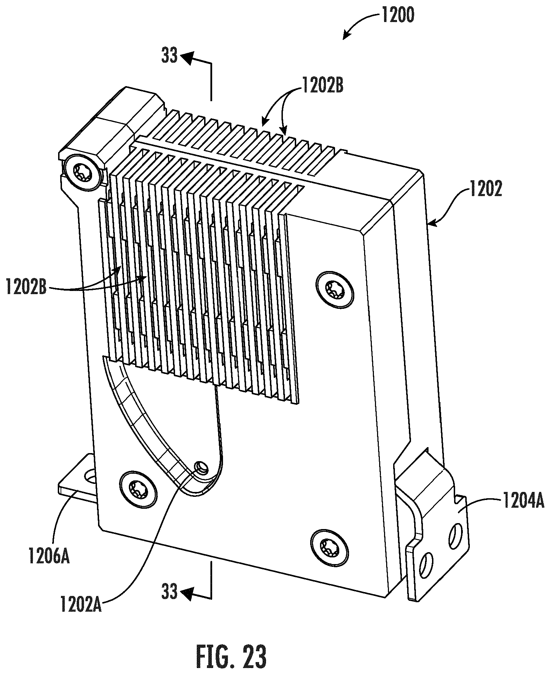

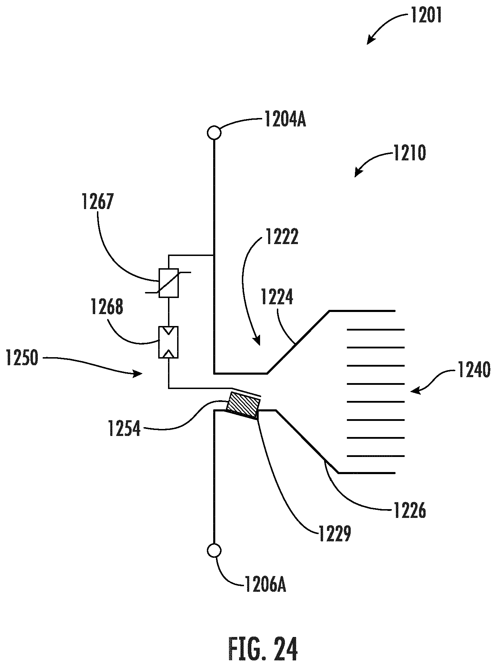

With reference to **FIGS. 23-33****,** an SPD module **1200** and SPD electrical circuit **1201 (****FIG. 24****)** according to the invention in shown therein. The SPD module **1200** and circuit **1201 are** constructed in the same manner as the SPD module **100** and circuit **101,** except as follows. The SPD module **1200** and circuit **1201** may be installed and used as a component in a protection circuit of a power supply circuit **10** as shown in **FIG. 1****,** for example.

The SPD module **1200** includes a module housing **1202** and an overvoltage protection circuit (OPC) **1210.** The OPC **1210** is disposed in the housing **1202,** and is electrically connected between electrical terminals **1204A** and **1206A** to form the SPD electrical circuit **1201.**

The OPC **1210** includes a spark gap assembly **1220,** a first electrode member **1204,** and a second electrode member **1206.** Portions of the electrode members **1204, 1206** form parts of the spark gap assembly **1220.**

The first electrode member **1204** includes the terminal **1204A,** a bridge portion **1204B,** and a first main or spark gap (SG) electrode **1224.** The second electrode member **1206** includes the terminal **1206A** and a second main or SG electrode **1226.**

The spark gap assembly **1220** includes a spark gap subassembly or horn spark gap assembly **1222,** a spark gap (SG) trigger circuit **1250,** and a deion chamber or arc chute **1240.** The SG trigger circuit **1250** is located at an inner end **1220A** of the spark gap assembly **1220** and the arc chute **1240** is located at an opposing outer end **1220B** of the spark gap assembly **1220.**

The horn spark gap assembly **1222** includes the first SG electrode **1224,** the second SG electrode **1226,** a spark gap **1230,** and laterally opposed side or containment walls 1228. The spark gap **1230** is defined between the electrodes **1224, 1226.**

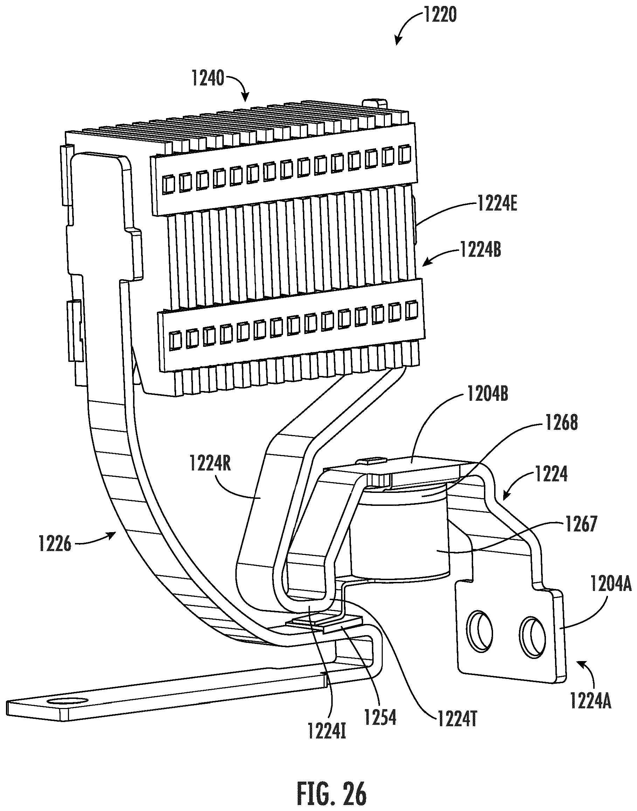

The first SG electrode **1224 (****FIG. 26****)** has an inner end **1224A** and an opposing outer end **1224B.** The first SG electrode **1224** includes (extending sequentially from the inner end **1224A** to the outer end **1224B)** a trigger section **1224T,** an ignition section **1224I**, a running section **1224R,** and an extinguishing section **1224E.**

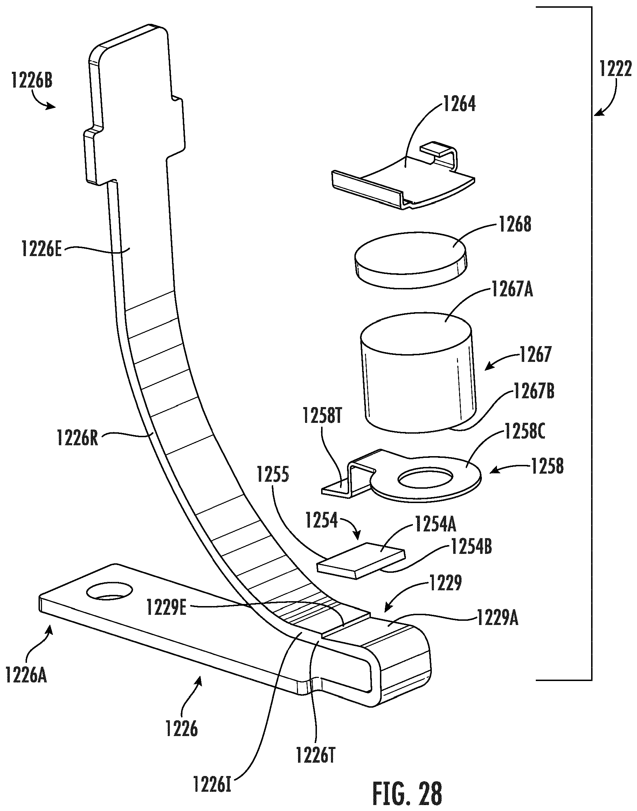

The second SG electrode **1226 (****FIG. 28****)** has an inner end **1226A** and an opposing outer end **1226B.** The second SG electrode **1226** includes (extending sequentially from the inner end **1226A** to the outer end **1226B),** a trigger section **1226T,** an ignition section **1226I,** a running section **1226R,** and an extinguishing section **1226E.**

The second SG electrode **1226** further includes a channel or groove **1229** defined therein. The groove **1229** defines and extends along a groove longitudinal axis **LG-LG** and along a groove lateral axis **WG-WG** transverse or perpendicular to the groove longitudinal axis **LG-LG.** The groove longitudinal axis **LG-LG** is parallel to the lengthwise axis **L-L** of the second SG electrode **1226** and the ignition region **1232I**.

The groove **1229** includes a base wall **1229A** and an end wall **1229E** at the distal end of the base wall **1229A.**

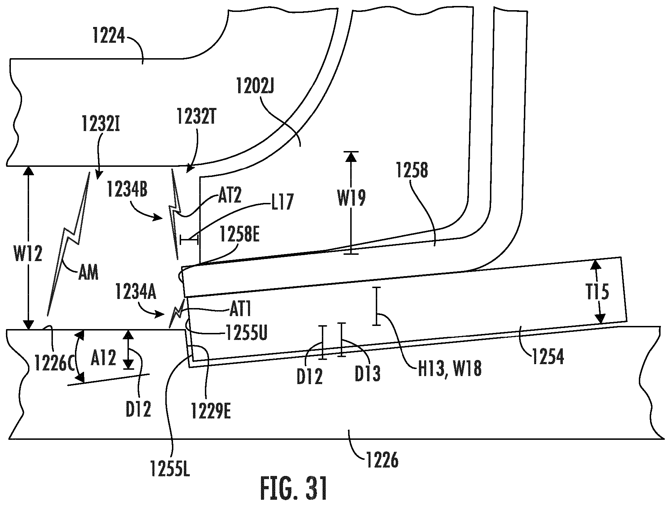

In some embodiments and as illustrated, the base wall **1229A** slopes or angles an angle **A12 (****FIG. 31****)** relative to the inner surface **1226C** of the second SG electrode **1226** in the direction toward the ignition region **1232I**. That is, the base wall **1229A** slopes outwardly relative to the spark gap **1230** (or inwardly with respect to the thickness of the second SG electrode **1226).** In some embodiments, the angle **A12** is at least 5 degrees. In some embodiments, the angle **A12** is in the range of 1 to 10 degrees.

The groove **1229** extends laterally across the width of the trigger section **1226T** (*i.e.,* transverse or perpendicular to the length of the second SG electrode **1226).** In some embodiments, the groove **1229** extends across the full width of the trigger section **1226T.**

In some embodiments, the groove **1229** has a depth **D12 (****FIG. 31****) at** the end wall **1229E** in the range of from 0.1 times the trigger member thickness **T15** to 1 times the trigger member thickness **T15.**

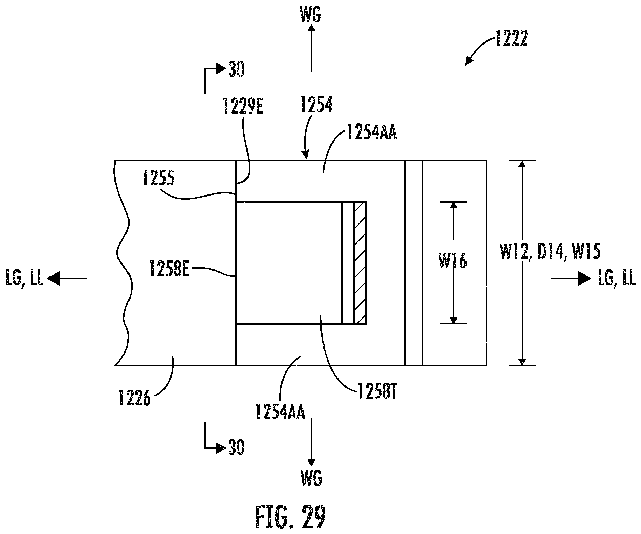

In some embodiments, the groove **1229** has a width **W12 (****FIG. 29****)** at the end wall **1229E** in the range of from 2 mm to 10 mm. The width **W12** can be the same as the width of the electrode **1226** or less.

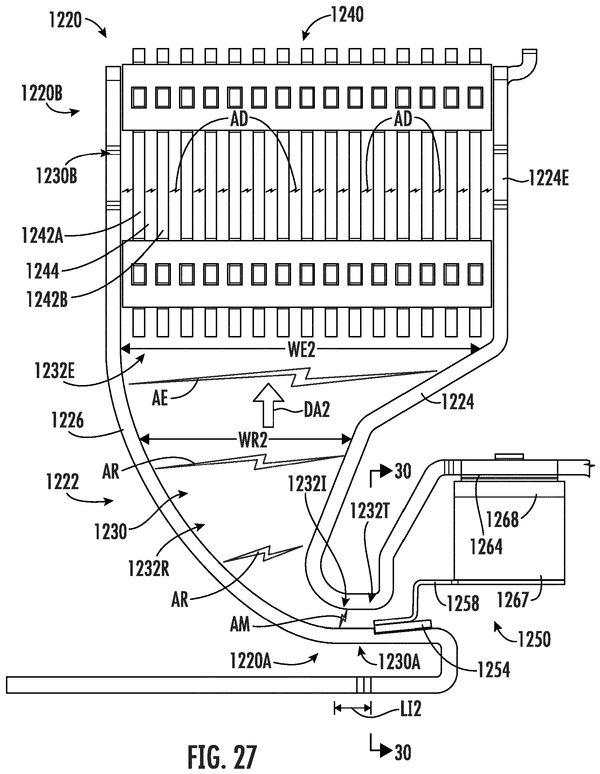

The spark gap **1230** is an air gap. The spark gap **1230** extends from an inner end **1230A** and to an opposing outer end **1230B.** With reference to **FIG. 27****,** the spark gap **1230** includes (extending sequentially from the inner end **1230A** to the outer end **1230B)** a trigger region **1232T,** an ignition region **1232I**, a running region **1232R,** and an extinguishing region **1232E.** The spark gap **1230** expands, widens or flares outward in a direction **DA2** from the end **1230A** to the end **1230B.** As a result, the spark gap **1230** has a first width **WI2 (****FIG. 31****)** in the ignition region **1232I** and the trigger region **1232T,** a second width **WR2 (****FIG. 27****)** in the running region **1232R,** and a third width **WE2 (****FIG. 27****)** in the extinguishing region **1232E.** Width **WR2** is great than width **WI2,** and width **WE2** is greater than width **WR2.** Width **WR2** varies and expands along the length of the running region **1232R.** In some embodiments, the spark gap **1230** expands smoothly from the ignition region **1232I** to the extinguishing region **1232E.** In some embodiments, the SG electrodes **1224, 1226** each have a curved profile.

In some embodiments, the ignition region spark gap width **WI2 (****FIG. 31****;** *i.e.,* the separation distance between the SG electrodes **1224, 1226)** is at least 1 mm and, in some embodiments, is at least 0.5 mm. In some embodiments, the spark gap width **WI2** is in the range of from about 0.5 mm to 3 mm.

In some embodiments, the length **LI2 (****FIG. 27****)** of the ignition region **1232I** is in the range of from about 0 mm to 7 mm.

In some embodiments, the depth **D14 (****FIG. 29****;** *i.e.,* the lateral dimension of the spark gap **1230** and the width of the SG electrodes **1224, 1226)** of the ignition region **1232I** is in the range of from about 2 mm to 10 mm.

In some embodiments, the extinguishing region spark gap width **WE2 (****FIG. 27****)** is in the range of from about 15 mm to 50 mm. In some embodiments, the spark gap width **WE2** is in the range of from about 500 to 5000 percent greater than the spark gap width **WI2.**

The SG electrodes **1224, 1226** may be formed of any suitable electrically conductive metal. In some embodiments, the SG electrodes **1224, 1226** are formed of copper, copper-steel bimetal, or any other combination of metals in bimetal composition.

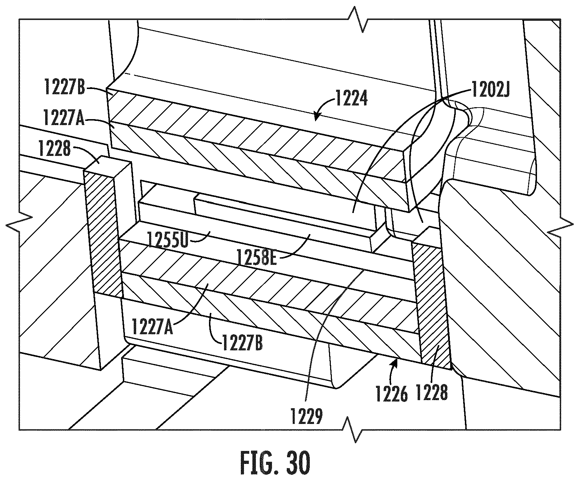

In some embodiments and as illustrated in **FIG. 30****,** each of the SG electrodes **1224, 1226** has a bimetal construction including an inner layer **1227A** of a first metal and an outer layer **1227B** of a second metal different than the first metal. In some embodiments, the inner layers **1227A** are formed of copper and the outer layers **1227B** are formed of steel. In some embodiments, each layer **1227A, 1227B** runs the full length of the electrode **1224, 1226.**

The containment walls **1228** may be formed of any suitable material. In some embodiments, the containment walls **1228** are formed of ceramic, polymer or plastic, insulating paper, ferromagnetic material insulated by paper, plastic or ceramic, or ferromagnetic material coated with a polymer or plastic.

With reference to **FIGS. 27****,** **32** and **33****,** the arc chute **1240** is located at the outer end **1230B** of the horn spark gap assembly **1222** at, in or proximate the extinguishing region **1232E.** The arc chute **1240** includes a set **1243** or series of electrically conductive arc, chute or deion electrodes or plates **1242A, 1242B** supported by electrically insulating supports **1246.** The deion plates **1242A, 1242B** are separated by deion plate arc gaps **1244.** The deion plates **1242A, 1242B** exposed side and end faces **1247.**

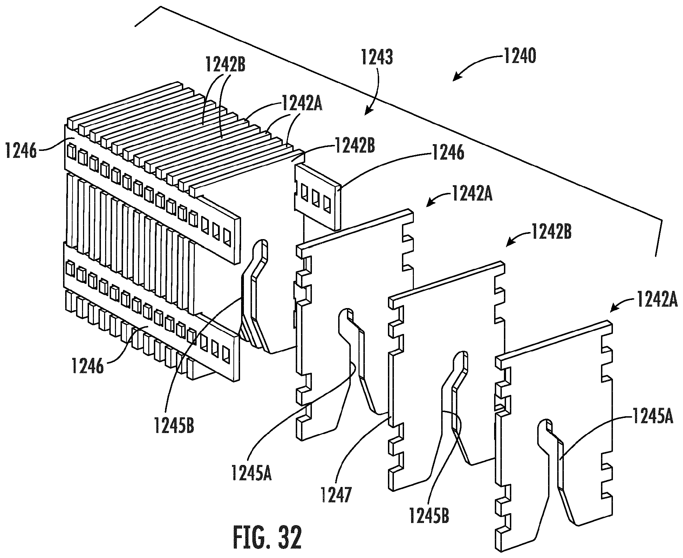

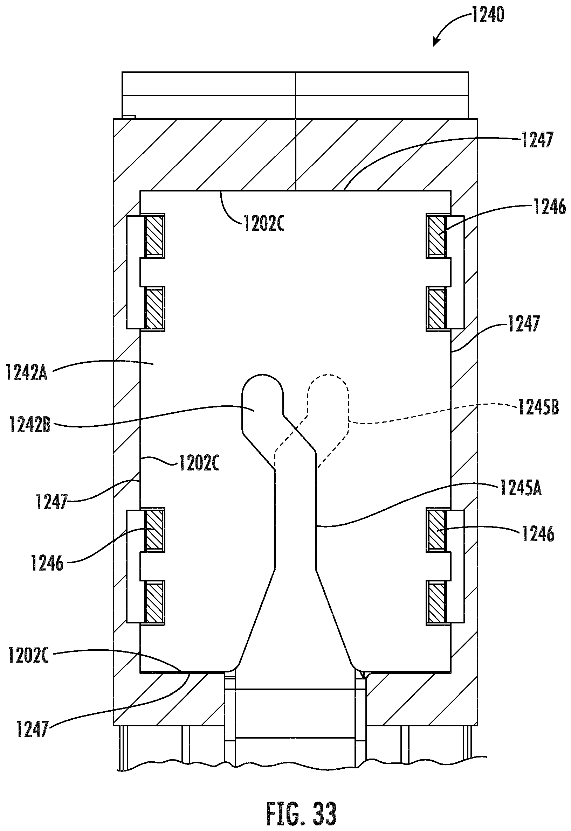

The arc chute **1240** differs from the arc chute **140** in that the arc chute **1240** includes alternating first deion plates **1242A** and second deion plates **1242B** having different configurations from one another, as shown in **FIGS. 32** and **33****.** More particularly, the plates **1242A** each have a slot **1245A** defined therein having a first shape or profile. The plates **1242B** each have a slot **1245B** defined therein having a second shape or profile that is different from the first profile.

The housing **1202** may be formed of any suitable electrically insulating material (e.g., an insulating polymer). The module housing **1202** includes a series of vent slots **1202B** defined therein. The module housing **1202** further includes a first arc gas recirculation port **1202E,** a second arc gas recirculation port **1202F,** an arc gas recirculation channel **1202G,** and opposed intake ports **1202H** defined therein.

The supports **1246** hold the deion plates **1242A, 1242B** together as a single unit, and the unit is seated in the housing **1202** such that features of the housing **1202** positively position the unit and the plates **1242A, 1242B** relative to the housing **1202.** The deion plates **1242A, 1242B** are thereby positioned such that each deion plate arc gap **1244** is aligned with a respective set of the vent slots **1202B** (*i.e.,* a front vent slot and a pair of opposed side vent slots).

In some embodiments, the deion plate side and end edges **1247** are positioned substantially flush with the mating or facing surfaces **1202C** of the module housing 1202.

The SG trigger circuit **1250** includes the spark gap trigger region **1232T,** the ignition region **1232I**, a semiconductive trigger member **1254,** a trigger electrode **1258,** a trigger varistor (*e.g.,* MOV) **1268,** a trigger GDT **1267,** and an electrically conductive (*e.g.,* copper) contact spring **1264.** In alternative embodiments, a resistor is used in place of the MOV **1268.**

The trigger electrode **1258 (****FIG. 28****)** may be formed of any suitable electrically conductive metal (*e.g.,* copper). The trigger electrode **1258** includes a contact portion **1258C,** a trigger portion **1258T,** and a terminal end **1258E.**

The trigger GDT **1267** has opposed contact terminals **1267A, 1267B.**

The semiconductive member **1254** is positioned in the groove **1229** adjacent the trigger gap **1232T** and interposed between the SG electrodes **1224, 1226.**

The MOV **1268,** the GDT **1267,** the trigger electrode **1258,** and the semiconductive member **1254** are connected in electrical series between the electrode **1224** and the electrode **1226** as represented schematically in **FIG. 24****.** The contact spring **1264** serves to take up manufacturing tolerances.

The semiconductive trigger member **1254 (****FIGS. 28-31****)** extends from a first end face **1254A** to an opposing second end face **1254B.** The first end face **1254A** electrically engages or contacts the trigger electrode **1258T.** The second end face **1254B** electrically engages or contacts the electrode trigger section **1226T.**

The semiconductive trigger member **1254** may be formed of any suitable semiconductive material. In some embodiments, the semiconductive member **1254** is formed of a material as described herein for the semiconductive member **154.**

In some embodiments, the semiconductive member **1254** is formed of a semiconductive ceramic. In some embodiments, the semiconductive member **1254** is formed of ZnO (zinc oxide) or BaTiO3 (Barium titanate) or SiC (silicon carbide), with different dopants (oxides, metals).

In some embodiments, the semiconductive material of the semiconductive member **1254** has a specific electrical resistance in the range of from 1 to 10,000 Ωcm, and a dielectric constant in the range of from 1 to 10,000. The semiconductive material may have a positive or negative temperature coefficient.

In some embodiments, the semiconductive trigger member **1254** has a thickness **T15 (****FIG. 31****)** of at least 0.2 mm and, in some embodiments, of at least 0.5 mm. In some embodiments, the thickness **T15** is in the range of from about 0.2 mm to 1.5 mm.

The width **W16 (****FIG. 29****)** of the trigger portion **1258T** is less than the width **W15 (****FIG. 29****)** of the trigger member **1254** so that lateral strips of portions **1254AA** of the first end face **1254A** are exposed and face opposing surfaces of the SG electrode **1224.**

The semiconductive trigger member **1254** is seated in the angled groove **1229.** The trigger member **1254** has a terminal side face **1255** adjacent the end wall 1229E of the groove **1229.** As shown in **FIG. 31****,** a first portion **1255L** of the terminal side face **1255** is embedded in the groove **1229** and second portion **1255U** of the terminal side face **1255** projects inwardly beyond the inner surface **1226A** of the electrode **1226** toward the electrode **1224.** In some embodiments, the terminal end **1258E** of the trigger electrode **1258** is coterminous with the terminal side face **1255.**

In some embodiments, the height **H13 (****FIG. 31****)** of the second portion **1255U** above the inner surface **1226A** is at least 0.05 mm or 0.1 times the thickness **T15** of the trigger member **1254.** In some embodiments, the height **H13** is in the range of from about 0 to 1 mm or 1 times the thickness **T15.**

In some embodiments, the depth **D13 (****FIG. 31****)** of the first portion **1255L** into the electrode **1226** is at least 0.3 mm. In some embodiments, the depth **D13** is at least 0.5 times the thickness **T15** of the trigger member **1254.** In some embodiments, the depth **D13** is in the range of from about 0 to the thickness **T15** of the trigger member **1254.**

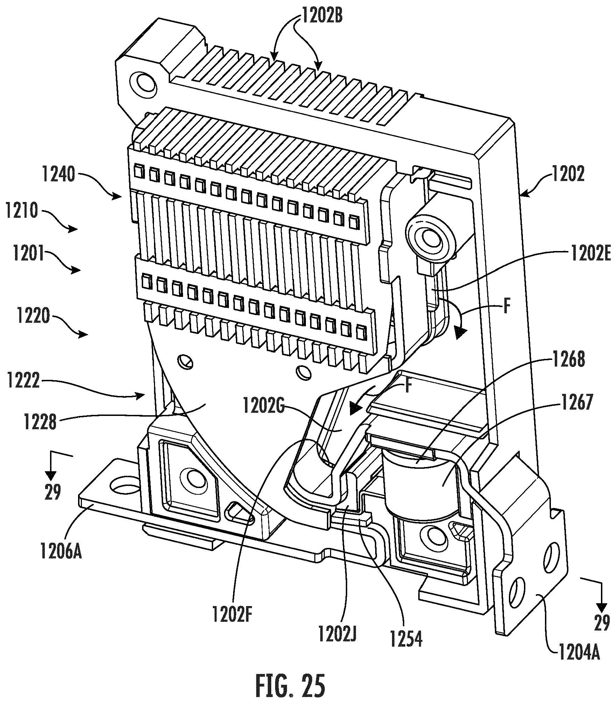

With reference to **FIGS. 25** and **30****,** the housing **1202** includes electrically insulating features **1202J** interposed between the trigger electrode **1258** and the first SG electrode **1224.** In some embodiments and as illustrated, the semiconductive trigger member **1254** and the trigger electrode **1258** project forwardly beyond the housing features **1202J** so that an exposed portion of the trigger electrode **1258** faces the first SG electrode **1224** and the end faces **1254E, 1258E** are located a projection distance **L17** from the features **1202J.**

With reference to **FIG. 31****,** the trigger region **1232T** of the spark gap **1230** includes a first trigger spark gap **1234A** and a second trigger spark gap **1234B.** The first trigger spark gap **1234A** is defined between the second SG electrode **1226** and the terminal end **1258E** of the trigger electrode **1258.** The second trigger spark gap **1234B** (*i.e.,* an air gap) is defined between the first SG electrode **1224** and the terminal end **1258E** of the trigger electrode **1258.**

In some embodiments, the first trigger spark gap **1234A** has a width **W18 (****FIG. 31****)** of at least 0.1 mm and, in some embodiments, of at least 1 mm. In some embodiments, the width **W18** is in the range of from about 0 mm to 1 mm. In some embodiments, the width **W18** is in the range of from 0 mm to the thickness **T15.**

In some embodiments, the second trigger spark gap **1234B** has a width **W19 (****FIG. 31****)** of at least 0.5 mm and, in some embodiments, of at least 1 mm. In some embodiments, the width **W19** is in the range of from about 0.5 mm to 1.5 mm. In some embodiments, the width **W19** is in the range of 0.2 times the width **WI2** of the spark gap **1230** in the ignition region **1232I** to 0.8 times the width **WI2.**

The widths **W18, W19** are each less than the width **WI2** of the ignition region **1232I**.

The spark gap **1230** has a prescribed threshold flashover voltage. The prescribed threshold flashover voltage is the minimum voltage that will cause a flashover between the first SG electrode **1224** and the second SG electrode **1226,** wherein this flashover between the SG electrodes **1224,1226** is initiated by the trigger circuit **1250** at the trigger region **1232T** (as discussed in more detail below). In some embodiments, the prescribed trigger threshold flashover voltage is less than 1500V. In some embodiments, the prescribed threshold flashover voltage is in the range of from about 300V to 1500V. When a voltage is applied across the terminals **1204A, 1206A** that is less than the threshold flashover voltage, the applied voltage will not ignite or initiate arc flashover between the SG electrodes **1224, 1226.** As discussed below, when a voltage is applied across the terminals **1204A, 1206A** that is greater than or equal to the threshold flashover voltage, the applied voltage will ignite or initiate arc flashover between the SG electrodes **1224, 1226.**

The SPD module **1200** may operate as follows in service.

According to some embodiments of the inventive concept, the SPD module **1200** is configured to operate under two different conditions: 1) normal (stand by) operation; and 2) an overvoltage or current surge event in which the SPD module **1200** is designed to shunt an SPD surge impulse current to ground.

The SPD module **1200** is designed to shunt an SPD surge impulse current to ground in response to an overvoltage or current surge event.

The SPD module **1200** is configured to operate in three alternative modes: 1) a standby mode; 2) a surge current mode; and 3) a follow current extinguishing mode.

The terminal **1204A** is electrically connected to the Line (L) of the circuit 10, and the terminal **1206A** is electrically connected to the Ground (G) of the circuit **10 (****FIG. 1****).**

During normal operation, the OPC **1210** practically acts as an insulator. The voltage applied across the spark gap **1230** is insufficient to initiate a spark across the spark gap **1230.** Also, the voltage applied is insufficient to initiate current through the trigger MOV **1268** and the trigger GDT **1267** of the trigger circuit.

When an overvoltage or current surge event (*e.g.,* a transient power surge) applies a surge impulse current to the SPD circuit **1201,** the OPC **1210** will temporarily go to a low impedance state (e.g., effectively becoming a short circuit). The OPC **1210** is designed to shunt the surge impulse current associated with such events to ground to protect sensitive equipment. The SPD surge impulse current may be on the order of tens of kA, but will typically last only a short duration (in the range of from about tens of microseconds to a few milliseconds).

During the surge event, the voltage applied across the trigger region **1232T** of the spark gap **1230** and the trigger components/member (trigger GDT **1268,** trigger MOV **1267** and semiconductive member **1254)** by the surge event exceeds the prescribed threshold flashover voltage of the trigger region **1232T** assisted by the trigger circuit **1250.** In response, the voltage across the trigger region **1232T** initiates a first electrical arc flashover or trigger arc **AT1 (****FIG. 31****)** across the first trigger spark gap **1234A.** That is, first arcing **AT1** is generated between the trigger electrode **1258** and the second SG electrode **1226** at section **1226T.**

The initiation of the first trigger arc **AT1** is assisted by the semiconductive trigger member **1254** in response to the overvoltage developed across the first trigger spark gap **1234A.** At the beginning of the surge current, the trigger MOV **1268** and the trigger GDT **1267** change their states to low impedance and current conduction occurs therethrough. At the beginning of the surge current, current conduction occurs through the bulk of the semiconductive member body and along the exterior surface (including the terminal side face **1255)** of the semiconductive trigger member **1254.** Very quickly thereafter *(e.g.,* within less than 1 microsecond), the flashover of the first trigger arc **AT1** occurs so that most of the surge current is bypassed through the arc column(s) established between the second SG electrode **1226** and the trigger electrode **1258.** By diverting the current around the semiconductive trigger member **1254,** degradation of the semiconductive trigger member **1254** is prevented or reduced.

Once formed, the first trigger arc **AT1** quickly (*e.g*., within less than 1 microsecond) propagates to generate a second electrical arc flashover or trigger arc **AT2 (****FIG. 31****)** across the second trigger spark gap **1234B.** That is, second arcing **AT2** is generated between the trigger electrode **1258** and the first SG electrode **1224** at section **1224T.**

Shortly after the start of the second trigger arc **AT2** (*e.g*., within microseconds), the current flow triggers an electric arc flashover or surge arc **AM** (as illustrated in **FIGS. 27** and **31****)** across the spark gap **1230** in the ignition region **1232I**. The SG trigger circuit **1250** thereby ignites the horn spark gap assembly **1222** and the full surge current is thereby conducted through the spark gap assembly **1222** via the surge arc **AM.**

Once the surge arc **AM** is established, the voltage drop of the surge arc **AM** is less than knee voltage of the trigger MOV **1267.** Thus, the trigger MOV **1267** reduces current through the trigger member **1254** below the level necessary to sustain the trigger GDT **1268** in conduction. Thus, any remaining current through the trigger member **1254** is cutoff.

The spark gap assembly **1220** is thereby triggered changing its state to low impedance. The surge current flows from the terminal **1204A** to the terminal **1206A** through the spark gap **1230,** thereby diverting the surge current to ground. During the surge event, the arcing or arc column **AM** across the spark gap **1230** may be located entirely or mainly in the arc ignition region **1232I** or partially in the running region **1232R.**

Once the surge arc **AM** is active, the current no longer flows through the trigger MOV **1268** and the trigger GDT **1267.**

The SPD **1200** then enters its follow current mode. Once the surge current is diverted to the ground, the spark gap **1222** remains electrically conductive, causing additional follow current from the system to flow into the SPD **1200.** This causes the arc column to move in an arc migration direction **DA** (from the end **1230A** toward the end **1230B**) along the arc running region **1232R** of the spark gap **1222** to the arc extinguishing region **1232E.** **FIG. 27** illustrates the arc column in the arc running region **1232R** as an electric arc **AR,** and the arc column in the arc extinguishing region **1232E** as an electric arc **AE.**

In the arc extinguishing region **1232E,** the follow current is redirected to (is conducted to, or flashes over to or arcs to) the deion plates **1242** from the SG electrode **1224.** The current then flows through the set **1243** of deion plates **1242A, 1242B** to the SG electrode **1226** by arcing **AD** between the deion plates **1242A, 1242B (****FIG. 27****).**

Each deion plate arc creates a voltage drop between the SG electrodes **1224, 1226** and the terminals **1204A, 1206A.** These voltage drops add together increasing the voltage between the SG electrodes **1224, 1226** to relatively high values, until the voltage across the arc chute **1240** is higher than the power system voltage. The voltage drop developed on the arc chute **1240** opposes the mains voltage thus the follow current is rapidly reduced and eventually extinguished.

These voltage drops also reduce the voltage across the spark gap **1222** to relatively low values, until the voltage across the spark gap **1222** is less than the ignition voltage necessary to sustain the arcing between the SG electrodes **1224, 1226.** The voltage across the spark gap **1222** is then also less than necessary to trigger flashover in the trigger region **1232T** and the ignition region **1232I**. The spark gap assembly **1222** is thereby opened at the spark gap **1230** and the follow current through the spark gap assembly **1222** and the SPD module **1200** is cut off or interrupted. The SPD module **1200** returns to its standby mode.

Thus, it will be appreciated that the electrical arc flashover **AT1, AT2** triggers the electric arc flashover **AM,** which during follow current expands and propagates to the arc chute **1240.** The expansion and propagation are driven by electromagnetic and acoustical forces. Once the arc **AE** enters the arc chute **1240,** it is divided or split into a plurality of smaller arcs in the arc chute **1240** and cooled down until the arc is eventually extinguished. This causes the SPD module **1200** to returns to its high impedance (standby) mode.

The trigger circuit **1250** (including the semiconductive trigger member **1254)** functions as a spark gap trigger that assists in initiating the flashover between the SG electrodes **1224, 1226.** The trigger circuit **1250** permits a minimum separation distance **WI2** between the electrodes **1224, 1226** that is large enough to prevent melting and soldering of the electrodes **1224, 1226** during surges. Because the trigger circuit **1250** is provided, the threshold flashover voltage of the gap **1230** is less than the voltage that would be required to initiate the flashover across the gap **1230** in the absence of the trigger circuit **1250** and the semiconductive trigger member **1254.** By reducing the minimum required flashover voltage, the trigger circuit 1250 and the semiconductive trigger member **1254** lower the protection level of the SPD electrical circuit **1201.**

The horn shape of the spark gap **1230** facilitates the path of the arc **AM.** The geometry of the SG electrodes guides the arc **AM** from the trigger region **1232T** to the extinguishing region **1232E.** The containment walls **1228** firmly restrict or contain the path of the arcing in the lateral directions.

The MOV **1268** and GDT **1267** are provided in front of the trigger member **1254** because the trigger member **1254 has** some resistance and thus will conduct the current on nominal voltage. By including MOV **1268** and GDT **1267,** the OPC **110** is made leakage current free (and, thus, the SPD module **1200** is leakage free).

Additionally, the MOV **1268** and GDT **1267** prevent and cut off any continuation currents through or along the semiconductive trigger member **1254** after the surge arc **AM** is initiated.

While the trigger circuit **1250** has been described including a trigger MOV **1268** and a trigger GDT **1267,** in other embodiments the trigger circuit may include other voltage-switching/limiting components. For example, the alternative trigger circuit may include the trigger MOV **1268** without a trigger GDT or may include the trigger GDT **1267** without a trigger MOV.

The groove **1229** ensures that the flashover **AT1** always occurs on the front end or side *(i.e.,* on or proximate face **1229E)** since the electrical path is longer on the back side of the trigger member **1254.** Also, the groove **1229** prevents the movement of the trigger member **1254** in the "front" or forward direction *(i.e.,* in the direction toward the ignition region **1232I**).

The cross-over pattern of the slots **1245A, 1245B** of the deion plates **1242A, 1242B** influences the movement or path of the individual arcs **AD** between the adjacent plates **1242A, 1242B** so that it forces the arcs **AD** into a spiral "tornado" or helical path. The arc **AD** between the first two plates **1242A, 1242B** goes left, the arc **AD** between the second and third plates **1242B, 1242A** goes right, the arc **AD** between the third and fourth plates **1242A, 1242B** goes left, and so forth. As a result, the paths of the arcs **AD** and the combined lengths of the arcs **AD** are made longer. Also, this prevents or inhibits re-ignitions and rebounding of the arc back to the running area **1232R** of the spark gap **1230.**

The SPD module **1200** also provides management for gases generated by arcing events. As discussed above, the gaps **1244** between the deion plates **1243** are each aligned with a respective set of exhaust slots **1202B** in the module housing **1202.** At least a portion of the pressurized arc gases generated by the arc **AM** flows between the deion plates **1242A, 1242B** and the out through the exhaust slots **1202B.** The arc gases are thereby expelled from the module housing **1202** so that back pressure on the arc gases in the spark gap **1220** is reduced or eliminated. Such back pressure may otherwise impede or interfere with the intended performance of the spark gap **1220.**

As discussed above, in some embodiments, all of side and front the edge faces **1247** of the deion plates **1242A, 1242B** fit substantially flush or in abutment with the facing surfaces of the plastic module housing **1202.** This is needed or beneficial because otherwise an arc could flashover individual plates **1242A, 1242B** creating one single long arc. That would diminish the follow through current extinguishing function of the spark gap assembly **1220.** Adding insulating walls in tight contact with the plates **1242A, 1242B** prevents this and gases are expelled without flashover across the arc chute **1240.**

During an arcing event, a portion of the arc gases generated thereby flow from the distal end **1230B** of the spark gap **1230** *(e.g.,* in or adjacent the arc chute **1240)** back to the ignition region **1232I**. More particularly, pressurized gas **F (****FIG. 25****)** flows sequentially through the arc gas recirculation port **1202E,** the recirculation channel **1202G** and the arc gas recirculation port **1202H** to the ignition region **1232I**. The recirculation can improve the follow through extinguishing behavior of the SPD module **1200.**

Ambient air is drawn into the ignition region **1232I** through the intake ports 1202H by the negative pressure generated during an arcing event. The inrush of surrounding air into the spark gap can provide a pressure release that improves the follow current extinguishing behavior.

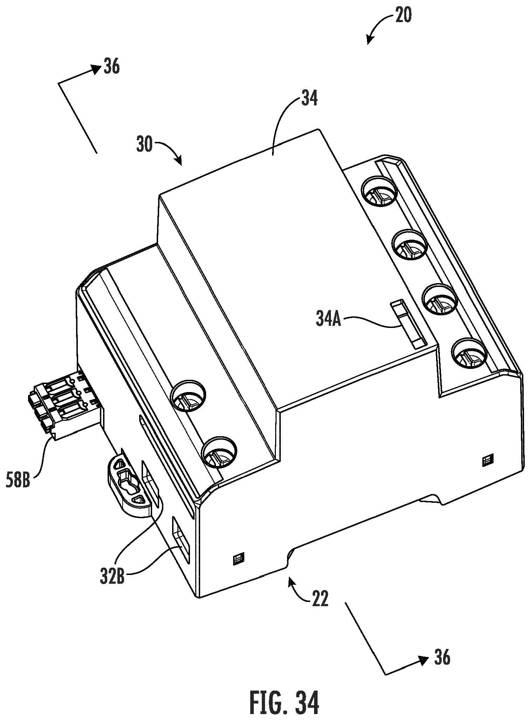

With reference to **FIGS. 34-39****,** an SPD assembly **20** according to some embodiments is shown therein. The SPD assembly **20** includes three of the SPD modules **1200** and a base module **22.** In other versions, the SPD assembly **20** includes SPD modules of other designs as disclosed herein *(e.g.,* the SPD module **100)** in place of the SPD modules **1200.**

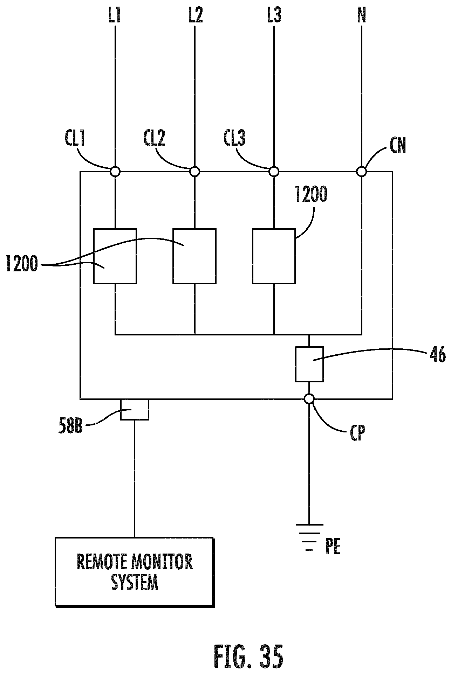

The SPD assembly **20** forms or embodies an SPD assembly circuit **41** as illustrated schematically in **FIG. 35****.** In **FIG. 35****,** the SPD assembly **20** is schematically shown installed in a representative system coupled with three power lines **L1, L2,** and **L3** (corresponding to a three-phase electrical power system), a neutral line **N,** and ground or protected earth **PE.**

The illustrated SPD assembly **20** is configured to be mounted on the DIN (Deutsches Institut für Normung e.V.) rail and to protect a three-phase system using a "3+1" protection configuration. However, other mounting and protection configurations may be provided in accordance with some embodiments of the technology. The illustrated SPD assembly **20** is configured to electrically and mechanically connect with electrical cables corresponding to lines **L1, L2, L3, N,** and **PE,** respectively.

The base module **22** includes a base housing **30,** a thermal indicator mechanism **50,** and a base electrical connection system **40.**

The base housing **30** includes a base member **32** and a cover **34.** The housing parts **32, 34** may be formed of any suitable material or materials. In some embodiments, the housing parts **32, 34** are formed of a rigid polymeric material or metal (*e.g.*, aluminum). Suitable polymeric materials may include polyamide (PA), polypropylene (PP), polyphenylene sulfide (PPS), or ABS, for example.

The base member **32** includes a DIN rail receiver channel **32A,** cable ports **32B,** and integral partition walls **32P.**

The cover **34** includes partition walls **34P** and a front window **34A.**

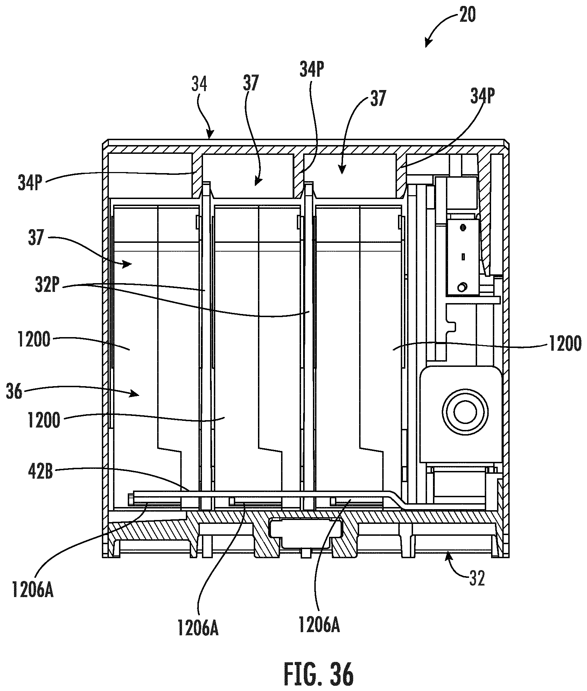

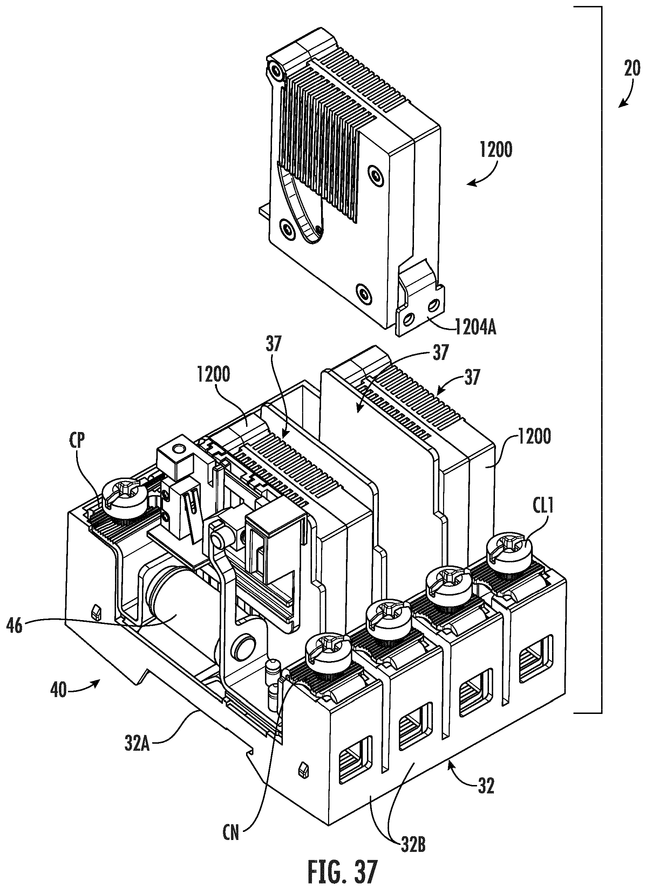

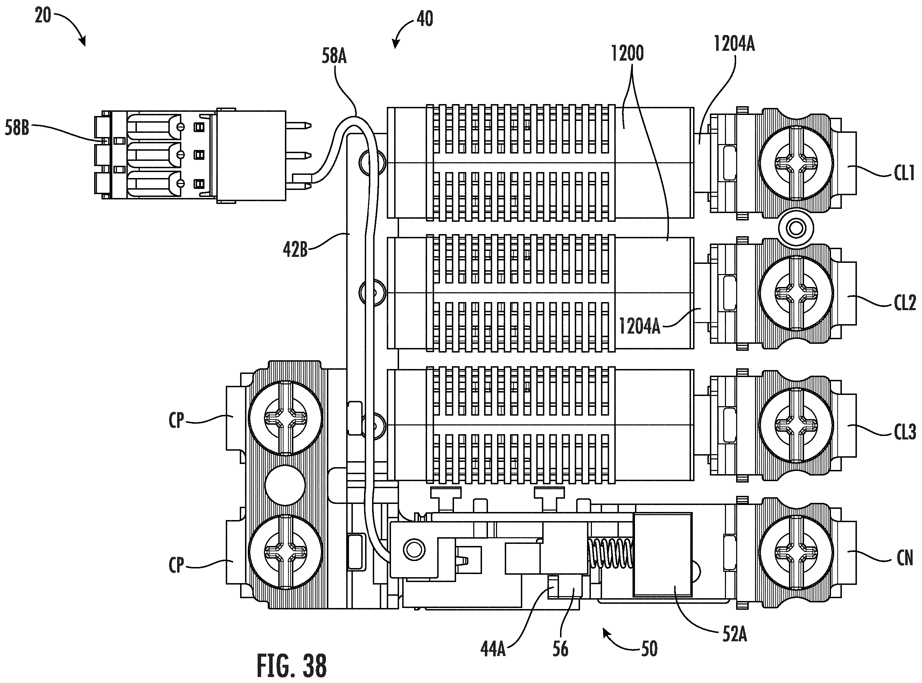

When the cover **34** is mounted on the base member **32,** the parts **32, 34** collectively define an internal cavity **36.** The partition walls **32P** and **34P** mate or align relative to one another to form three module subchambers **37 (****FIGS. 36** and **37****).** Each SPD module **1200** is seated or disposed in a respective one of the subchambers **37 (****FIG. 38****).**

The electrical connection system **40 (****FIG. 38****)** includes cable clamp connectors **CL1, CL2, CL3, CN, CP** (each positioned at respective cable port **32B),** a neutral busbar **42** and the GDT **46.** The neutral busbar **42** has a neutral connection end **42A** and a module connection section **42B.** The connector **CN** includes an extension leg **44** having a distal section **44A.**

The terminals **1204A** of the SPD modules **1200** are each connected to a respective one of the connectors **CL1, CL2, CL3.** The terminals **1206A** of the SPD modules **1200** and neutral connector **CN** are each connected to neutral busbar **42.** The PE connector **CP** is connected to the neutral busbar **42** through the GDT **46.**

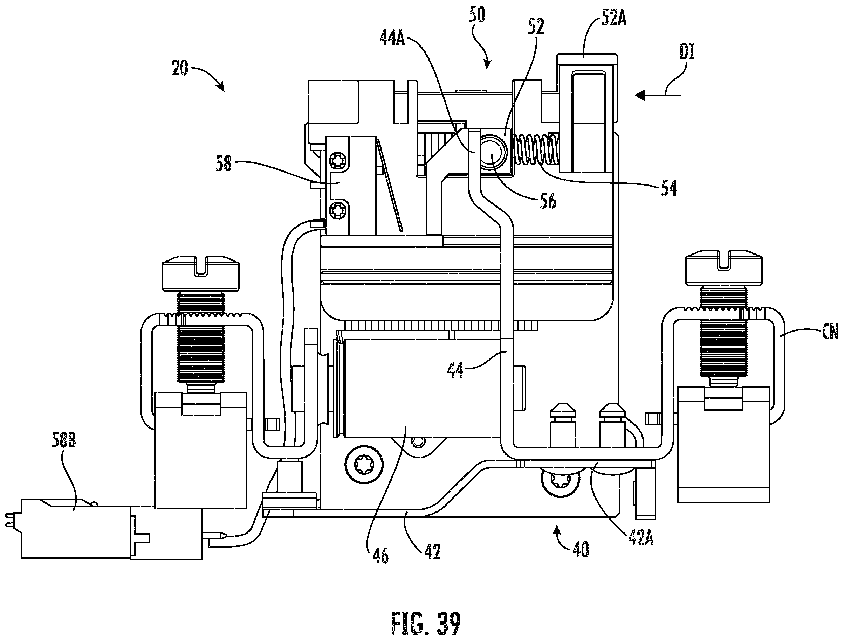

The thermal indicator mechanism **50 (****FIG. 39****)** includes the extension leg **44,** an indicator member or slider **52,** an indicator spring **54,** a meltable member or peg **56,** the window **34A,** an electrical switch **58** *(e.g.,* a microswitch), and a remote signal connector **58B.** The remote signal connector **58B** is connected to the electrical switch **58** by a wire **58A.**

The meltable peg **56** is secured to the slider **52** (*e.g.,* by friction fit). The spring **54** is compressed in a ready position (as shown in **FIG. 39****)** and tends to force the slider **52** in an indication direction **DI.** The meltable peg **56** bears against the distal section **44A** and the extension leg **44** acts as stop that prevents the slider **52** from moving in the direction **DI.**

The partition walls **32P, 34P** partition the SPD modules **1200** in the subchambers **37** from one another. The partition walls **32P, 34P** are interposed directly between the vent slots **1202B** of adjacent SPD modules **1200.** This partitioning prevents the occurrence of undesired short circuits between the electrical phases **L1, L2, L3** by hot gases expelled by the SPD modules **1200** during surge and follow current extinguishing events. It will be appreciated that the subchambers **37** may not be fluidly sealed from one another, but that the placement and configuration of the partition walls **32P, 34P** will prevent gas flows between the subchambers **37** sufficient to create said undesired short circuits.

The thermal indicator mechanism **50** serves to provide a local alert and a remote alert in the event the SPD assembly **20** fails or reaches an end-of-life state. A failure of the SPD assembly **20** may occur when one of more of the SPD modules **1200** short-circuits or overheats. In this case, heat from the SPD module(s) **1200** is conducted to the meltable peg **56** through the terminal **1206A,** the neutral busbar **42,** and the extension leg **44.** Once sufficient heat has been transferred to the meltable peg **56,** the meltable peg **56** will melt or soften until it is no longer rigid enough to hold the slider **52** against the force of the spring **54.** The slider **52** is thereby released to translate in the direction **DI** from the ready position to an alerting position. The slider **52** presses the switch **58,** which generates a corresponding signal to the remote monitor connector **58B.** A remote monitoring system may be connected to the remote monitor connector **58B** to detect the failure condition. In the ready position, an indicator section **52A** of the slider **52** occupies the window **34A.** In the alerting position, the indicator section **52A** is displaced from the window **34A,** thereby providing a local, visual indication that the SPD assembly **20** has failed.

In other embodiments, the SPD module **1200** is modified to further include an active voltage-switching or active voltage-limiting component such as a varistor or GDT in electrical series with the spark gap assembly **1220.**

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

It will be understood that, although the terms "first," "second," etc. may be used herein to describe various elements, these elements should not be limited by these terms. These terms are only used to distinguish one element from another. Thus, a first element could be termed a second element without departing from the teachings of the inventive subject matter.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

Many alterations and modifications may be made by those having ordinary skill in the art, given the benefit of present disclosure. Therefore, it must be understood that the illustrated embodiments have been set forth only for the purposes of example, and that they should not be taken as limiting the invention as defined by the following claims.

## Claims

1. A surge protective device (1200) comprising:
a first electrical terminal (1204A);
a second electrical terminal (1206A); and
an overvoltage protection circuit (1210) connected between the first electrical terminal and the second electrical terminal, the overvoltage protection circuit including:
a spark gap assembly (1220) between the first electrical terminal and the second electrical terminal, the spark gap assembly including:
a first spark gap, SG, electrode (1224) and a second SG electrode (1226) defining a spark gap (1230) therebetween; and
a trigger circuit (1250) operative to ignite a main electric arc (AM) between the first and second SG electrodes across the spark gap;
wherein the trigger circuit (1250) includes:
a groove (1229) defined in the second SG electrode (1226); and
a trigger member (1254) disposed in the groove, wherein the trigger member is operative to assist formation of a trigger arc (AT);
**characterised in that**:
the trigger circuit includes a trigger electrode (1258) interposed between the trigger member (1254) and the first SG electrode (1224);
the trigger electrode (1258) electrically connects the trigger member (1254) to the first electrical terminal (1204A) in electrical parallel with the first SG electrode (1224);
the first SG electrode (1224), the second SG electrode (1226) and the trigger electrode (1258) define:
a first trigger spark gap (1234A) between the second SG electrode (1226) and the trigger electrode (1258); and
a second trigger spark gap (1234B) between the trigger electrode (1258) and the first SG electrode (1224); and
the spark gap assembly is configured to, in response to a surge impulse current, initiate a first trigger arc (AT1) across the first trigger spark gap (1234A) and thereafter a second trigger arc (AT2) across the second trigger spark gap (1234B).

2. The surge protective device of Claim 1 wherein the trigger member (1254) is a semiconductive trigger member.

3. The surge protective device of Claim 2 wherein the semiconductive trigger member is formed of a semiconductive ceramic.

4. The surge protective device of any preceding Claim wherein the trigger circuit (1250) includes a trigger varistor (1268), a trigger gas discharge tube (1267), and/or a trigger resistive element in electrical series with the trigger member (1254) and in electrical parallel with the spark gap (1230).

5. The surge protective device of any preceding Claim wherein the trigger member (1254) is in electrical contact with the trigger electrode (1258) and with the second SG electrode (1226).

6. The surge protective device of Claim 5 wherein the trigger circuit (1250) includes a trigger varistor (1268), a trigger gas discharge tube (1267), and/or a trigger resistive element in electrical series with the trigger electrode (1258) and in electrical parallel with the first SG electrode (1224).

7. The surge protective device of any preceding Claim wherein the spark gap assembly (1220) is a horn spark gap assembly.

8. The surge protective device of Claim 7 wherein:
the trigger member (1254) is located at a first end (1230A) of the spark gap (1230); and
the spark gap assembly (1220) includes an arc chute (1240) located at an opposing second end (1230B) of the spark gap.

9. The surge protective device of any preceding Claim including an active voltage-switching/limiting component in electrical series with the spark gap assembly.

10. The surge protective device of Claim 9 wherein the active voltage-switching/limiting component includes a varistor or a gas discharge tube.

11. The surge protective device of any preceding Claim wherein the trigger circuit has a trigger threshold flashover voltage for initiating electrical flashover between the first and second SG electrodes (1224, 1226) that is less than a threshold flashover voltage that would initiate electrical flashover between the first and second SG electrodes in the absence of the trigger circuit.

12. The surge protective device of any preceding Claim wherein:
the surge protective device is a surge protective device module including a spark gap module housing (1202); and
the spark gap assembly (1220) is disposed in the spark gap module housing

13. The surge protective device of Claim 12 wherein:
the trigger member (1254) is located at a first end (1230A) of the spark gap; and
the spark gap module housing includes an arc gas recirculation channel (1202G) configured to direct a flow (F) of arc gas from a second end (1230B) of the spark gap opposite the first end of the spark gap to an ignition region (1232I) of the spark gap adjacent the trigger member.

14. The surge protective device of Claim 12 or Claim 13 wherein the spark gap module housing includes an intake port (1202A) configured to direct a flow of ambient air into an ignition region (1232I) of the spark gap adjacent the trigger member (1254).

15. The surge protective device of any preceding Claim wherein:
the spark gap assembly (1220) is a horn spark gap assembly;
the spark gap assembly includes an arc chute (1240);
the arc chute includes a set (1243) of deion plates including:
a plurality of first deion plates (1242A) each having a first slot (1245A) having a first profile; and
a plurality of second deion plates (1242B) each having a second slot (1245B) having a second profile different than the first profile; and
the first and second deion plates are arranged in spaced apart relation and in alternating series along a chute axis such that the first and second deion plates define a series of arc chute spark gaps extending along the chute axis.

16. The surge protective device of Claim 1 wherein:
the overvoltage protection circuit (1210) includes an active voltage-switching/limiting component;
the spark gap assembly () is in electrical series with the active voltage-switching/limiting component between the first electrical terminal and the second electrical terminal;
the spark gap assembly is a horn spark gap assembly; and
the spark gap assembly includes an arc chute (1240).

17. The surge protective device of Claim 1 wherein:
the spark gap (1230) includes:
an ignition region (1232I); and
a trigger region (1232T) including the first trigger spark gap (1234A) and the second trigger spark gap (1234B) and located between the trigger member (1254) and the ignition region (12321);
the groove (1229) includes a base wall (1229A); and
the base wall (1229A) slopes outwardly relative to the spark gap (1230) at an angle (A12) in a direction toward the ignition region (12321).

## Patentansprüche

1. Überspannungsschutzvorrichtung (1200), umfassend:
einen ersten elektrischen Anschluss (1204A);
einen zweiten elektrischen Anschluss (1206A); und
eine Überspannungsschutzschaltung (1210), die zwischen dem ersten elektrischen Anschluss und dem zweiten elektrischen Anschluss verbunden ist, wobei die Überspannungsschutzschaltung Folgendes beinhaltet:
eine Funkenstreckenbaugruppe (1220) zwischen dem ersten elektrischen Anschluss und dem zweiten elektrischen Anschluss, wobei die Funkenstreckenbaugruppe Folgendes beinhaltet:
eine erste Funkenstrecken (SG) -Elektrode (1224) und eine zweite SG-Elektrode (1226), die eine Funkenstrecke (1230) dazwischen definieren; und
eine Auslöseschaltung (1250), die dazu dient, einen elektrischen Hauptlichtbogen (AM) zwischen der ersten und der zweiten SG-Elektrode über die Funkenstrecke zu zünden;
wobei die Auslöseschaltung (1250) Folgendes beinhaltet:
eine Nut (1229), die in der zweiten SG-Elektrode (1226) definiert ist; und
ein Auslöseelement (1254), das in der Nut angeordnet ist, wobei das Auslöseelement dazu dient, die Bildung eines Auslöselichtbogens (AT) zu unterstützen;
**dadurch gekennzeichnet, dass**:
die Auslöseschaltung eine Auslöseelektrode (1258) beinhaltet, die zwischen dem Auslöseelement (1254) und der ersten SG-Elektrode (1224) angeordnet ist;
die Auslöseelektrode (1258) das Auslöseelement (1254) elektrisch mit dem ersten elektrischen Anschluss (1204A) in elektrischer Parallelschaltung mit der ersten SG-Elektrode (1224) verbindet;
die erste SG-Elektrode (1224), die zweite SG-Elektrode (1226) und die Auslöseelektrode (1258) Folgendes definieren:
eine erste Auslösefunkenstrecke (1234A) zwischen der zweiten SG-Elektrode (1226) und der Auslöseelektrode (1258); und
eine zweite Auslösefunkenstrecke (1234B) zwischen der Auslöseelektrode (1258) und der ersten SG-Elektrode (1224); und
die Funkenstreckenbaugruppe dazu konfiguriert ist, als Reaktion auf einen Überspannungsimpulsstrom einen ersten Auslöselichtbogen (AT1) über die erste Auslösefunkenstrecke (1234A) und danach einen zweiten Auslöselichtbogen (AT2) über die zweite Auslösefunkenstrecke (1234B) zu initiieren.

2. Überspannungsschutzvorrichtung nach Anspruch 1, wobei das Auslöseelement (1254) ein halbleitendes Auslöseelement ist.

3. Überspannungsschutzvorrichtung nach Anspruch 2, wobei das halbleitende Auslöseelement aus einer halbleitenden Keramik ausgebildet ist.

4. Überspannungsschutzvorrichtung nach einem der vorhergehenden Ansprüche, wobei die Auslöseschaltung (1250) einen Auslösevaristor (1268), eine Auslösegasentladungsröhre (1267) und/oder ein Auslösewiderstandselement in elektrischer Reihenschaltung mit dem Auslöseelement (1254) und in elektrischer Parallelschaltung mit der Funkenstrecke (1230) beinhaltet.

5. Überspannungsschutzvorrichtung nach einem der vorhergehenden Ansprüche, wobei das Auslöseelement (1254) in elektrischem Kontakt mit der Auslöseelektrode (1258) und mit der zweiten SG-Elektrode (1226) steht.

6. Überspannungsschutzvorrichtung nach Anspruch 5, wobei die Auslöseschaltung (1250) einen Auslösevaristor (1268), eine Auslösegasentladungsröhre (1267) und/oder ein Auslösewiderstandselement in elektrischer Reihenschaltung mit der Auslöseelektrode (1258) und in elektrischer Parallelschaltung mit der ersten SG-Elektrode (1224) beinhaltet.

7. Überspannungsschutzvorrichtung nach einem der vorhergehenden Ansprüche, wobei die Funkenstreckenbaugruppe (1220) eine Hörnerfunkenstreckenbaugruppe ist.

8. Überspannungsschutzvorrichtung nach Anspruch 7, wobei:
das Auslöseelement (1254) sich an einem ersten Ende (1230A) der Funkenstrecke (1230) befindet; und
die Funkenstreckenbaugruppe (1220) einen Lichtbogenschacht (1240) beinhaltet, der sich an einem gegenüberliegenden zweiten Ende (1230B) der Funkenstrecke befindet.

9. Überspannungsschutzvorrichtung nach einem der vorhergehenden Ansprüche, beinhaltend eine aktive spannungsschaltende/- begrenzende Komponente in elektrischer Reihenschaltung mit der Funkenstreckenbaugruppe.

10. Überspannungsschutzvorrichtung nach Anspruch 9, wobei die aktive spannungsschaltende/-begrenzende Komponente einen Varistor oder eine Gasentladungsröhre beinhaltet.

11. Überspannungsschutzvorrichtung nach einem der vorhergehenden Ansprüche, wobei die Auslöseschaltung eine Auslöseschwellenüberschlagsspannung zum Initiieren eines elektrischen Überschlags zwischen der ersten und der zweiten SG-Elektrode (1224, 1226) aufweist, die geringer ist als eine Schwellenüberschlagsspannung, die bei Abwesenheit der Auslöseschaltung einen elektrischen Überschlag zwischen der ersten und der zweiten SG-Elektrode auslösen würde.

12. Überspannungsschutzvorrichtung nach einem der vorhergehenden Ansprüche, wobei:
die Überspannungsschutzvorrichtung ein Überspannungsschutzvorrichtungsmodul ist, das ein Funkenstreckenmodulgehäuse (1202) beinhaltet; und
die Funkenstreckenbaugruppe (1220) im Funkenstreckenmodulgehäuse angeordnet ist.

13. Überspannungsschutzvorrichtung nach Anspruch 12, wobei:
das Auslöseelement (1254) sich an einem ersten Ende (1230A) der Funkenstrecke befindet; und
das Funkenstreckenmodulgehäuse einen Lichtbogengasrückführungskanal (1202G) beinhaltet, der dazu konfiguriert ist, einen Strom (F) von Lichtbogengas von einem zweiten Ende (1230B) der Funkenstrecke gegenüber dem ersten Ende der Funkenstrecke zu einem Zündbereich (1232I) der Funkenstrecke benachbart zum Auslöseelement zu leiten.

14. Überspannungsschutzvorrichtung nach Anspruch 12 oder Anspruch 13, wobei das Funkenstreckenmodulgehäuse eine Einlassöffnung (1202A) beinhaltet, die dazu konfiguriert ist, einen Strom von Umgebungsluft in einen Zündbereich (1232I) der Funkenstrecke benachbart zum Auslöseelement (1254) zu leiten.

15. Überspannungsschutzvorrichtung nach einem der vorhergehenden Ansprüche, wobei:
die Funkenstreckenbaugruppe (1220) eine Hörnerfunkenstreckenbaugruppe ist;
die Funkenstreckenbaugruppe einen Lichtbogenschacht (1240) beinhaltet;
der Lichtbogenschacht einen Satz (1243) von Entionisierungsplatten beinhaltet, die Folgendes beinhalten:
eine Vielzahl von ersten Entionisierungsplatten (1242A), die jeweils einen ersten Schlitz (1245A) aufweisen, der ein erstes Profil aufweist; und
eine Vielzahl von zweiten Entionisierungsplatten (1242B), die jeweils einen zweiten Schlitz (1245B) aufweisen, der ein zweites Profil aufweist, das sich vom ersten Profil unterscheidet; und
die erste und die zweite Entionisierungsplatte in voneinander beabstandeter Beziehung und in abwechselnden Reihen entlang einer Schachtachse angeordnet sind, derart, dass die erste und die zweite Entionisierungsplatte eine Reihe von Lichtbogenschachtfunkenstrecken definieren, die sich entlang der Schachtachse erstrecken.

16. Überspannungsschutzvorrichtung nach Anspruch 1, wobei:
die Überspannungsschutzschaltung (1210) eine aktive spannungsschaltende/-begrenzende Komponente beinhaltet;
die Funkenstreckenbaugruppe () in elektrischer Reihenschaltung mit der aktiven spannungsschaltenden/-begrenzenden Komponente zwischen dem ersten elektrischen Anschluss und dem zweiten elektrischen Anschluss liegt;
die Funkenstreckenbaugruppe eine Hörnerfunkenstreckenbaugruppe ist; und
die Funkenstreckenbaugruppe einen Lichtbogenschacht (1240) beinhaltet.

17. Überspannungsschutzvorrichtung nach Anspruch 1, wobei:
die Funkenstrecke (1230) Folgendes beinhaltet:
einen Zündbereich (12321); und
einen Auslösebereich (1232T), der die erste Auslösefunkenstrecke (1234A) und die zweite Auslösefunkenstrecke (1234B) beinhaltet und sich zwischen dem Auslöseelement (1254) und dem Zündbereich (1232I) befindet;
die Nut (1229) eine Basiswand (1229A) beinhaltet; und
die Basiswand (1229A) relativ zur Funkenstrecke (1230) in einem Winkel (A12) in einer Richtung zum Zündbereich (1232I) hin nach außen geneigt ist.

## Revendications

1. Dispositif de protection contre les surtensions (1200) comprenant :
une première borne électrique (1204A) ;
une seconde borne électrique (1206A) ; et
un circuit de protection contre les surtensions (1210) connecté entre la première borne électrique et la seconde borne électrique, le circuit de protection contre les surtensions comportant :
un ensemble d'éclateur (1220) entre la première borne électrique et la seconde borne électrique, l'ensemble d'éclateur comportant :
une première électrode d'éclateur, SG (1224) et une seconde électrode SG (1226) définissant un éclateur (1230) entre elles ; et
un circuit de déclenchement (1250) fonctionnant pour allumer un arc électrique principal (AM) entre la première et la seconde électrode SG à travers l'éclateur ;
dans lequel le circuit de déclenchement (1250) comporte :
une rainure (1229) définie dans la seconde électrode SG (1226) ; et
un élément de déclenchement (1254) disposé dans la rainure, dans lequel l'élément de déclenchement est destiné à faciliter la formation d'un arc de déclenchement (AT) ;
**caractérisé en ce que** :
le circuit de déclenchement comporte une électrode de déclenchement (1258) interposée entre l'élément de déclenchement (1254) et la première électrode SG (1224) ;
l'électrode de déclenchement (1258) connecte électriquement l'élément de déclenchement (1254) à la première borne électrique (1204A) en parallèle électrique avec la première électrode SG (1224) ;
la première électrode SG (1224), la seconde électrode SG (1226) et l'électrode de déclenchement (1258) définissent :
un premier éclateur de déclenchement (1234A) entre la seconde électrode SG (1226) et l'électrode de déclenchement (1258) ; et
un second éclateur de déclenchement (1234B) entre l'électrode de déclenchement (1258) et la première électrode SG (1224) ; et
l'ensemble d'éclateur est configuré pour, en réponse à un courant d'impulsion de surtension, allumer un premier arc de déclenchement (AT1) à travers le premier éclateur de déclenchement (1234A) et ensuite un second arc de déclenchement (AT2) à travers le second éclateur de déclenchement (1234B).

2. Dispositif de protection contre les surtensions selon la revendication 1, dans lequel l'élément de déclenchement (1254) est un élément de déclenchement semi-conducteur.

3. Dispositif de protection contre les surtensions selon la revendication 2, dans lequel l'élément de déclenchement semi-conducteur est formé d'une céramique semi-conductrice.

4. Dispositif de protection contre les surtensions selon une quelconque revendication précédente dans lequel le circuit de déclenchement (1250) comporte une varistance de déclenchement (1268), un tube à décharge de gaz de déclenchement (1267) et/ou un élément résistif de déclenchement en série électrique avec l'élément de déclenchement (1254) et en parallèle électrique avec l'éclateur (1230).

5. Dispositif de protection contre les surtensions selon une quelconque revendication précédente dans lequel l'élément de déclenchement (1254) est en contact électrique avec l'électrode de déclenchement (1258) et avec la seconde électrode SG (1226).

6. Dispositif de protection contre les surtensions selon la revendication 5, dans lequel le circuit de déclenchement (1250) comporte une varistance de déclenchement (1268), un tube à décharge de gaz de déclenchement (1267) et/ou un élément résistif de déclenchement en série électrique avec l'électrode de déclenchement (1258) et en parallèle électrique avec la première électrode SG (1224).

7. Dispositif de protection contre les surtensions selon une quelconque revendication précédente dans lequel l'ensemble d'éclateur (1220) est un ensemble d'éclateur à corne.

8. Dispositif de protection contre les surtensions selon la revendication 7, dans lequel :
l'élément de déclenchement (1254) est situé à une première extrémité (1230A) de l'éclateur (1230) ; et
l'ensemble d'éclateur (1220) comporte une goulotte d'arc (1240) située à une seconde extrémité opposée (1230B) de l'éclateur.

9. Dispositif de protection contre les surtensions selon une quelconque revendication précédente comportant un composant actif de commutation/limitation de tension en série électrique avec l'ensemble d'éclateur.

10. Dispositif de protection contre les surtensions selon la revendication 9, dans lequel le composant actif de commutation/limitation de tension comporte une varistance ou un tube à décharge de gaz.

11. Dispositif de protection contre les surtensions selon une quelconque revendication précédente dans lequel le circuit de déclenchement présente une tension de contournement seuil pour initier un contournement électrique entre la première et la seconde électrode SG (1224, 1226) qui est inférieure à une tension de contournement seuil qui initierait un contournement électrique entre la première et la seconde électrode SG en l'absence du circuit de déclenchement.

12. Dispositif de protection contre les surtensions selon une quelconque revendication précédente, dans lequel :
le dispositif de protection contre les surtensions est un module de dispositif de protection contre les surtensions comportant un boîtier de module d'éclateur (1202) ; et
l'ensemble d'éclateur (1220) est disposé dans le boîtier du module d'éclateur.

13. Dispositif de protection contre les surtensions selon la revendication 12, dans lequel :
l'élément de déclenchement (1254) est situé à une première extrémité (1230A) de l'éclateur ; et
le boîtier du module d'éclateur comporte un canal de recirculation de gaz d'arc (1202G) configuré pour diriger un flux (F) de gaz d'arc depuis une seconde extrémité (1230B) de l'éclateur opposée à la première extrémité de l'éclateur vers une zone d'allumage (12321) de l'éclateur adjacente à l'élément de déclenchement.

14. Dispositif de protection contre les surtensions selon la revendication 12 ou la revendication 13 dans lequel le boîtier du module d'éclateur comporte un orifice d'admission (1202A) configuré pour diriger un flux d'air ambiant dans une zone d'allumage (12321) de l'éclateur adjacent à l'élément de déclenchement (1254).

15. Dispositif de protection contre les surtensions selon une quelconque revendication précédente, dans lequel :
l'ensemble d'éclateur (1220) est un ensemble d'éclateur à corne ;
l'ensemble d'éclateur comporte une goulotte d'arc (1240) ;
la goulotte d'arc comporte un ensemble (1243) de plaques de désionisation comportant :
une pluralité de premières plaques de désionisation (1242A) présentant chacune une première fente (1245A) présentant un premier profil ; et
une pluralité de secondes plaques de désionisation (1242B) présentant chacune une seconde fente (1245B) présentant un second profil différent du premier profil ; et
les première et seconde plaques de désionisation sont agencées de manière espacée et en série alternée le long d'un axe de goulotte, de sorte que les première et seconde plaques de désionisation définissent une série d'éclateurs de goulottes d'arc se prolongeant le long de l'axe de goulotte.

16. Dispositif de protection contre les surtensions selon la revendication 1, dans lequel :
le circuit de protection contre les surtensions (1210) comporte un composant actif de commutation/limitation de tension ;
l'ensemble d'éclateur () est en série électrique avec le composant actif de commutation/limitation de tension entre la première borne électrique et la seconde borne électrique ;
l'ensemble d'éclateur est un ensemble d'éclateur à corne ; et
l'ensemble d'éclateur comporte une goulotte d'arc (1240).

17. Dispositif de protection contre les surtensions selon la revendication 1, dans lequel :
l'éclateur (1230) comporte :
une zone d'allumage (12321) ; et
une zone de déclenchement (1232T) comportant le premier éclateur de déclenchement (1234A) et le second éclateur de déclenchement (1234B) et située entre l'élément de déclenchement (1254) et la zone d'allumage (1232I) ;
la rainure (1229) comporte une paroi de base (1229A) ; et
la paroi de base (1229A) s'incline vers l'extérieur par rapport à l'éclateur (1230) à un angle (A12) dans une direction vers la zone d'allumage (1232I).
